# EUROPÄISCHE PATENTSCHRIFT

(11) **EP 1 657 208 B1**
(45) Veröffentlichungstag und Bekanntmachung des Hinweises auf die Patenterteilung: **25.12.2013**
(21) Anmeldenummer: 06101117.7
(22) Anmeldetag: 09.06.2004
(51) Int. Cl.: B66B 15/04, B66D 3/04, F16H 55/50

(54) **Treibrolle mit Beschichtung**
Drive pulley with coating
Poulie d'entraînement avec revêtement

(30) Priorität: 19.06.2003 EP 03405444
(43) Veröffentlichungstag der Anmeldung: 17.05.2006
(62) Teilanmeldung aus: 04013568.3
(73) Patentinhaber: Inventio AG, 6052 Hergiswil (CH)
(72) Erfinder: EICHHORN, Roland, 5727 Oberkulm (CH); ACH, Ernst, 6030 Ebikon (CH)

(56) Entgegenhaltungen:
- EP-A1- 1 096 176
- WO-A2-2004/113219
- CH-A- 641 254
- US-A- 432 701
- US-A- 3 838 752
- US-B1- 6 405 833
- US-B1- 6 419 208
- DATABASE WPI Section PQ, Week 198109 Derwent Publications Ltd., London, GB; Class Q38, AN 1981-B8433D XP002263646 -& SU 742 366 A (MOGIL TECH SUPPLY) 25. Juni 1980 (1980-06-25)

## Beschreibung

Die Erfindung bezieht sich auf einen Aufzug zum Befördern mindestens einer Last mittels mindestens eines bewegbaren Zugmittels nach dem Oberbegriff des Patentanspruchs 1.

Als ein bekanntes Beispiel für einen derartigen Aufzug kann u.a. eine konventionelle Aufzugsanlage betrachtet werden, in der eine Last, beispielsweise eine Aufzugskabine, oder auch mehrere Lasten, beispielsweise eine Aufzugskabine und ein Gegengewicht zur Kompensation des Gewichts der Aufzugskabine, an mindestens einem Tragmittel aufgehängt sind. Als Tragmittel dienen in der Regel ein oder mehrere Seile und/oder ein oder mehrere Riemen. Die jeweiligen Tragmittel stehen dabei mit den jeweiligen Lasten derart in Verbindung, dass bei einer Bewegung der Tragmittel die jeweiligen Lasten befördert werden, beispielsweise zwischen verschiedenen Stockwerken eines Gebäudes. Im vorliegenden Fall hat ein Tragmittel auch die Funktion eines Zugmittels.

Im Folgenden wird - wenn nichts anderes spezifiziert ist - der Begriff Zugmittel auch als Bezeichnung für ein Zugmittel, das als Trag- und Zugmittel für eine Last ausgelegt ist, verwendet.

Bisher wurden eine Reihe von Anordnungen für Zugmittel zur Beförderung von Lasten vorgeschlagen, in denen jedes Zugmittel in einen Kontakt gebracht ist mit mindestens einem Körper, um das Zugmittel zu führen. Der Kontakt mit dem jeweiligen Körper begrenzt den Bewegungsspielraum des Zugmittels und bewirkt somit eine Führung des Zugmittels. Die Grenzfläche zwischen dem Zugmittel und dem Körper ist dabei von grosser Bedeutung für die Leistungsfähigkeit der jeweiligen Anordnung. Die Art der Grenzfläche beeinflusst beispielsweise die Reibung zwischen dem Zugmittel und dem Körper und beeinflusst Verschleisserscheinungen, die durch den Kontakt zwischen dem Zugmittel und dem Körper hervorgerufen werden können. Es können Körper verwendet werden, die eine Beschichtung an Stellen aufweisen, an denen das Zugmittel mit dem Körper in Kontakt steht. Der Kontakt zwischen dem Körper und dem Zugmittel kann durch eine geeignete Wahl der Beschichtung optimiert werden.

In konventionellen Aufzugsanlagen werden beispielsweise die Zugmittel für Aufzugskabine bzw. Gegengewichte in der Regel mit mindestens einer Rolle und/oder mindestens einem Gleitelement in Kontakt gebracht. Die Rolle bzw. das Gleitelement hat dabei einen Einfluss auf die momentane räumliche Anordnung des Zugmittels und insbesondere auf eine Bewegung eines Längsabschnitts des Zugmittels sowohl in der Längsrichtung als auch in der Querrichtung des Längsabschnitts.

In konventionellen Aufzugsanlagen werden Rollen in der Regel für verschiedene Zwecke verwendet, beispielsweise als Treibrollen oder auch als Umlenkrollen für die jeweiligen Zugmittel.

Eine Treibrolle ist mit einem Antrieb in eine Rotation versetzbar und hat in der Regel die Aufgabe, ein Zugmittel zu bewegen. Zu diesem Zweck wird die Treibrolle derart bezüglich des Zugmittels angeordnet, dass das Zugmittel mit einer Oberfläche der Treibrolle, die bei einer Rotation der Treibrolle bewegt wird, in Kontakt steht und dass bei einer Bewegung der Oberfläche Traktionskräfte auf das Zugmittel übertragen werden. In der Regel wird die Treibrolle derart ausgerichtet, dass ein Längsabschnitt des Zugmittels im wesentlichen parallel zu der Richtung, in der die Oberfläche bewegbar ist, ausgerichtet ist. Unter dieser Bedingung ist die Kraftübertragung zwischen Treibrolle und Zugmittel in der Längsrichtung des Zugmittels optimal. Diese Konfiguration ist offensichtlich besonders gut geeignet, um eine Bewegung des Zugmittels in dessen Längsrichtung zu erreichen. Um eine grosse Traktion zu erzielen, wird das Zugmittel in der Regel derart angeordnet, dass es die Treibrolle längs einer kreisförmigen Umfangslinie um eine Drehachse der Treibrolle teilweise oder sogar ganz oder mehr als einmal umschlingt. Bei dieser Art der Führung des Zugmittels ändert sich demnach an der Treibrolle die Richtung der Längserstreckung des Zugmittels.

Umlenkrollen sind im Gegensatz zu Treibrollen nicht mit einem Antrieb versehen und deshalb nicht geeignet, ein Zugmittel anzutreiben. Vielmehr ist mit einem Zugmittel, das mit einer Umlenkrolle längs einer Umfangslinie um die Drehachse der Umlenkrolle in Kontakt gebracht ist, ein Drehmoment auf die Umlenkrolle übertragbar und somit die Umlenkrolle in eine Rotation versetzbar, wenn das Zugmittel bewegt wird. In der Regel werden Umlenkrollen derart mit einem Zugmittel in Kontakt gebracht, dass das Zugmittel die Umlenkrolle längs einer kreisförmigen Umfangslinie um deren Drehachse teilweise oder sogar ganz umschlingt.

Umlenkrollen werden in Aufzugsanlagen für unterschiedliche Zwecke verwendet. Bei einer typischen Anwendung wird eine Umlenkrolle ortsfest bezüglich einer stationären Tragstruktur der Aufzugsanlage installiert, um verschiedene Längsabschnitte eines Zugmittels in unterschiedliche Richtungen zu lenken. Kräfte, die an dem Zugmittel angreifen, werden dabei zumindest teilweise über das Lager der Drehachse der Umlenkrolle in die Tragstruktur der Aufzugsanlage eingeleitet. Bei einer anderen typischen Anwendung werden eine oder mehrere Umlenkrollen verwendet, um eine Last in einer durch einen Längsabschnitt eines Zugmittels gebildeten Umschlingung der Umlenkrollen aufzuhängen. In diesem Fall wird durch eine Bewegung des Zugmittels in dessen Längsrichtung eine relative Bewegung zwischen Umlenkrollen und Zugmittel und somit eine Beförderung der Last erreicht.

Es sind eine Reihe von Vorschlägen bekannt, die auf die Optimierung der Grenzflächen zwischen einem Zugmittel und einer Rolle gerichtet sind. Die Optimierungen zielen in der Regel auf eine Erhöhung der Traktion zwischen Zugmittel und Rolle.

Aus US3838752 ist beispielsweise eine Aufzugsanlage bekannt, in der Seile, die eine Aufzugskabine und ein Gegengewicht verbinden, durch Rillen einer Treibrolle geführt sind. An die Grenzflächen zwischen den Seilen und der Treibrolle werden Schmiermittel gebracht, die den Reibwert für den Kontakt zwischen einem der Seile und der Treibrolle erhöhen, verglichen mit dem Reibwert für einen entsprechenden Kontakt ohne Schmiermittel. In diesem Fall sorgt das Schmiermittel für eine Erhöhung der Traktionskräfte zwischen der Treibrolle und den Seilen.

Die Patentanmeldung WO 02/074677 offenbart eine Aufzugsanlage mit einer Treibrolle für Seile. Die Treibrolle umfasst einen Rollenkörper, in dem längs einer Umfangslinie mehrere Rillen zur Führung der Seile ausgeprägt sind, und eine auf den Rollenkörper aufgebrachte Beschichtung, beispielsweise aus Gummi oder Polyurethan. Die Beschichtung bewirkt - im Vergleich zum Rollenkörper - eine erhöhte Reibung zwischen der Treibrolle und den Seilen und somit eine Vergrösserung der Traktionskräfte zwischen der Treibrolle und den Seilen.

Die Patentanmeldung EP 1096176 A1 offenbart einen Aufzug gemäß dem Oberbegriff des Anspruchs 1 mit einer Treibrolle zum Antreiben von Kunstfaserseilen, vorzugsweise für einen Seilantrieb einer Aufzugsanlage. Die Treibrolle weist Rillen auf, durch die Seile geführt sind. Die Rillenflächen, die mit den Seile in Kontakt stehen, sind derart präpariert sind, dass sie - entweder aufgrund einer mechanischen Bearbeitung oder aufgrund des Aufbringens einer geeigneten Beschichtung - eine definierte Oberflächenrauigkeit aufweisen. Die Oberflächenrauigkeit bewirkt eine Erhöhung des Reibwerts für einen Kontakt zwischen den Seilen und der Treibscheibe, verglichen mit einer unbearbeiteten bzw. unbeschichteten Treibrolle. Die zwischen der Treibrolle und den Seilen übertragbaren Traktionskräfte werden somit erhöht.

US 6 419 208 zeigt eine Führungsrolle für einen Flachriemen mit einer reibwertvermindernden Beschichtung.

Um hohe Traktionskräfte zwischen einer Rolle und einem an der Rolle an liegenden Zugmittel, beispielsweise einem Seil oder einem Riemen, zu erreichen, stehen dem Fachmann mehrere Möglichkeiten offen:
(i) die jeweiligen Werkstoffe der Teile des Zugmittels und der Rolle, die miteinander in Kontakt stehen, können geeignet gewählt werden, um eine möglichst hohe Reibung zu erzielen und
(ii) die Anpresskraft zwischen dem Zugmittel und der Rolle kann möglichst gross gewählt werden.

Die Möglichkeiten (i) und (ii) können jeweils in einem gewissen Rahmen für Optimierung genutzt werden.

Ist beispielsweise die Rolle aus Stahl und das Zugmittel ein Seil, dessen äussere Oberfläche aus Stahldrähten gebildet ist, dann ist einem Kontakt zwischen dem Seil und der Rolle ein relativ geringer Reibwert zuzuordnen. Da aber Drähte aus Stahl quer zur Richtung ihrer Längserstreckung in hohem Masse belastbar sind, kann die Möglichkeit genutzt werden, die Anpresskraft zwischen dem Seil und der Rolle besonders gross zu wählen. Zu diesem Zweck kann beispielsweise das Seil an der Oberfläche der Rolle in einer Rille geführt werden, die so dimensioniert ist, dass das Seil in der Querrichtung eingeklemmt wird. Alternativ bzw. zusätzlich kann die Rille so ausgebildet sein, dass das Seil am Grund der Rille auf einer möglichst kleinen, scharfkantigen Auflagefläche aufliegt.

Abweichend von diesem Beispiel liegen wesentlich andere Bedingungen vor bei Zugmitteln, die lasttragende Fasern aus synthetischem Material, beispielsweise Aramid, enthalten. Während derartige Fasern von geringem Gewicht und in ihrer Längsrichtung hochbelastbar sind, sind diese in ihrer Querrichtung weit geringer belastbar als Stahldrähte und anfällig für Beschädigungen durch so genannte Querkräfte, d.h. Kräfte, die quer zur Längsrichtung wirken. Da ein Zugmittel bei einem Kontakt mit einer Rolle und bei einer Übertragung von Traktionskräften zwischen dem Zugmittel und der Rolle hohen Querkräften ausgesetzt sein kann, haben sich als Zugmittel mit lasttragenden Fasern aus einem synthetischen Material solche Zugmittel durchgesetzt, bei denen die Fasern durch eine Umhüllung geschützt sind. Beispielsweise sind Seile aus Aramid bekannt, die aus einem durch Verseilen von mehreren Litzen aus Aramidfasern gebildeten Kernseil und einem das Kernseil als Ganzes umgebenden Seilmantel bestehen. Als Material für den Seilmantel haben sich vor allem elastische Materialien, beispielsweise Elastomere wie Polyurethan oder Gummi, bewährt. Als Alternative für derartige Seile sind Seile bekannt, die durch Verseilen von mehreren aus Kunstfasern gebildeten Litzen entstanden sind, wobei die Litzen jeweils einzeln eine schützende Umhüllung, beispielsweise aus Elastomeren wie Polyurethan oder Gummi, aufweisen. Auch bei dieser Alternative sind die Litzen bei einer geeigneten Dimensionierung der Umhüllung der einzelnen Litzen wirksam vor Schädigungen durch Querkräfte geschützt.

Die genannten mit einer Umhüllung versehenen Kunstfaserseile haben die Eigenschaft, dass die üblichen für eine Umhüllung geeigneten Materialien einen relativ grossen Reibwert für einen Kontakt mit den üblichen Materialien, die für Rollen verwendet werden (beispielsweise Stahl oder Gusseisen), haben. Dies kann in verschiedener Hinsicht als Vorteil betrachtet werden. Beispielsweise können bei einem Kontakt zwischen einem dieser Seile und einer konventionellen Treibrolle relativ grosse Traktionskräfte übertragen werden, selbst wenn relativ kleine Anpresskräfte zwischen Seil und Rolle wirken. Auf zusätzliche Massnahmen, die die Anpresskräfte zwischen Seil und Rolle erhöhen (beispielsweise eine Auflage des Seils auf kleinen, scharfkantigen Auflageflächen oder eine Einklemmung des Seils in einer engen Rille), kann deshalb gewöhnlich verzichtet werden. Wegen des grossen Reibwerts für den Kontakt zwischen der Umhüllung und einer konventionellen Treibrolle muss ein Seil eine konventionelle Treibrolle nur längs einer relativ kurzen Strecke umschlingen, um ausreichend grosse Traktionskräfte zu übertragen. Deshalb können ausreichend grosse Traktionskräfte mit Treibrollen erzielt werden, die einen relativ kleinen Durchmesser aufweisen. Zum Antreiben derartiger Rollen müssen deshalb relativ kleine Drehmomente aufgebracht werden. Als Antrieb solcher Rollen reichen folglich relativ kleine Motoren aus. Dieser Vorteil kann bei einer Verwendung von Kunstfaserseilen in einem hohen Masse ausgenutzt werden, da Kunstfaserseile meist in hohem Masse biegsam sind und deshalb längs Bahnen mit relativ kleinem Krümmungsradius geführt werden können.

Als Zugmittel in Aufzugsanlagen werden neuerdings auch Riemen verwendet. Diese enthalten in der Regel mehrere in der Längsrichtung des Riemens angeordnete lastragende Organe, beispielsweise aus Draht oder Litzen aus Kunstfasern. Die lasttragenden Organe sind ihrerseits in der Regel in einem Mantel aus einem elastischen Material einbettet. Als Material für den Mantel findet in der Regel Polyurethan oder Gummi Verwendung. Derartige Riemen haben den Vorteil, dass sie eine hohe Flexibilität aufweisen können in der Richtung, in der ein Riemen die geringste Erstreckung quer zur Längsrichtung aufweist. Die grosse Flexibilität ermöglicht es, Rollen mit einem kleinen Durchmesser als Treibrollen zu verwenden. Einer Miniaturisierung der Treibrollen sind allerdings auch dadurch Grenzen gesetzt, dass zur Übertragung ausreichend grosser Traktionskräfte zwischen einer Treibrolle und einem Riemen eine ausreichend grosse Kontaktfläche zwischen dem Riemen und der Treibrolle vorliegen muss. Die Kontaktfläche kann um so kleiner gewählt werden, je grösser der Reibwert für einen Kontakt zwischen dem Riemen und der Treibrolle ist. Ist die Kontaktfläche zu klein und/oder der Reibwert zu gering, dann besteht die Gefahr, dass der Riemen bei einer Drehung der Treibrolle an der Kontaktfläche rutscht. Im Hinblick auf die Miniaturisierung der Treibrollen und der Antriebe für die Treibrollen ist es daher von Vorteil, wenn der Mantel eines Riemens einen hohen Reibwert gewährleistet.

Der Wunsch nach einer Miniaturisierung der verwendeten Komponenten ist eine wesentliche treibende Kraft bei der Fortentwicklung von Aufzugsanlagen und anderer Vorrichtungen zur Beförderung von Lasten, zumal die Miniaturisierung der einzelnen Komponenten die Entwicklung immer leistungsfähigerer Vorrichtungen mit einem reduzierten Platzbedarf ermöglicht und somit die Grundlage für Kostenreduktionen schafft.

Der Trend zur Miniaturisierung hat allerdings in der letzten Zeit zur Realisierung extremer Betriebsbedingungen geführt, die problematische Begleiterscheinungen aufzeigen.

Anordnungen von Zugmittel, die zum Befördern einer Last bewegt werden, zeigen häufig Instabilitäten, die mit Bewegungen eines Zugmittels quer zur Richtung seiner Längserstreckung im Zusammenhang stehen.

Bei Aufzügen mit konventionellen Kunstfaserseilen als Zugmittel zeigt sich beispielsweise eine grosse Schrägzugempfindlichkeit dieser Seile. Ist ein in seiner Längsrichtung bewegtes Kunstfaserseil beispielsweise in Kontakt mit einer rotierenden Rolle und ist das Seil so geführt, dass das Seil sich an der Oberfläche der Rollen nicht innerhalb einer Ebene senkrecht zur Drehachse der Rolle, sondern vielmehr in einem Winkel zu dieser Ebene, also unter "schrägem Zug" (Schrägzug) bewegt, dann treten im Betrieb Verdrehungen des Seils um seine Längsrichtung auf. Häufig sind solche Verdrehungen im Dauerbetrieb nicht reversibel. Eine Verdrehung eines Seils kann im Dauerbetrieb derart anwachsen, dass die Litzen eines Seils geschädigt werden. Dieser Effekt kann die Lebensdauer eines Seils drastisch reduzieren und zu einem vorzeitigen Ausfall eines Aufzugs führen.

Dieser Effekt ist insbesondere bei Kunstfaserseilen häufig störend, da diese aufgrund der mechanischen Eigenschaften der üblichen Kunstfasern keine grosse Steifigkeit gegen Verdrehungen aufweisen.

Eine übermässige Schrägzugempfindlichkeit ist allerdings limitierend. Einerseits setzt eine perfekte Vermeidung von Schrägzug hohe Anforderungen an die Einhaltung von Toleranzen im Hinblick auf die Führung von Zugmitteln und die Anordnung der Flächen, mit denen die Zugmittel in Kontakt sind, voraus. Andererseits gibt es beispielsweise im Aufzugsbau Bestrebungen, Schrägzug von Zugmitteln gezielt in Kauf zu nehmen, um durch eine spezielle Geometrie der Führung der Zugmittel die Raumnutzung in einem Aufzugsschacht zu verbessern. Die Verwendung derartiger Design-Konzepte ist limitiert, wenn die vorgesehenen Zugmittel eine grosse Empfindlichkeit gegen Schrägzug aufweisen.

Bei Aufzugsanlagen, bei denen die Aufzugskabinen und Gegengewichten mit einem über eine Treibrolle und/oder über eine oder mehrere Umlenkrollen laufende Riemen bewegt werden, beobachtet man unter Umständen den Effekt, dass der Riemen mehr oder weniger unkontrolliert auf den Oberflächen der jeweiligen Rollen seitlich - d.h. in Richtung der Drehachsen der jeweiligen Rollen - hin und her wandert und somit eine seitliche Bewegung zeigt, bezogen auf die Laufrichtung des Riemens, d.h. die Längsrichtung des Riemens. In diesem Fall ist der Riemen allein durch den Teil der Rollenoberfläche, auf dem er aufliegt, nicht stabil geführt. Um einen Riemen besser seitlich zu führen, können Rollen mit Rillen verwendet werden, bei denen eine Auflagefläche für einen Riemen jeweils durch den Grund einer Rille gebildet ist. In diesem Fall können die Flanken der Rille jeweils als seitliche Begrenzung für einen Riemen wirken, um eine seitliche Bewegung des Riemens einzuschränken. In der Praxis zeigt sich aber, dass eine seitliche Führung des Riemens durch Rillenflanken neue Probleme mit sich bringt. Riemen können nämlich mit den Rillenflanken auf verschiedene Weisen wechselwirken. Beispielsweise kann ein Riemen Verschleisserscheinungen insbesondere an Stellen zeigen, die im laufenden Betrieb in Kontakt mit den Rillenflanken geraten. Im Kontakt mit den Rillenflanken können Deformationen des Riemens hervorgerufen werden. Diese Deformationen können zu einem instabilen Lauf des Riemens führen. Beispielsweise kann es vorkommen, dass der Riemen beim Lauf durch die Rille plötzlich über die Rillenflanke hinauswandert und die Rille verlässt. Ein derartiges Verhalten eines Riemens wäre in einer Aufzugsanlage unakzeptabel, da die Betriebssicherheit nicht gewährleistet wäre.

Ausgehend von den vorstehend genannten Problemen liegt der vorliegenden Erfindung die Aufgabe zugrunde, einen Aufzug zu schaffen, bei dem die zur Beförderung einer Last bewegten Zugmittel auf eine möglichst schonende Weise geführt sind.

Diese Aufgabe wird erfindungsgemäss durch einen Aufzug gemäss der Kombination der Merkmale des unabhängigen Patentanspruchs 1 gelöst.

Der erfindungsgemässe Aufzug weist mindestens ein bewegbares, mit einer Last verbundenes Zugmittel auf, wobei mindestens ein Abschnitt des Zugmittels in einen Kontakt gebracht ist mit mindestens einer Rolle, um das Zugmittel zu führen. Die Rolle umfasst eine Beschichtung und einen drehbar gelagerten Rollenkörper, der als Träger der Beschichtung dient, wobei das Zugmittel mit der Beschichtung in Kontakt bringbar ist. Erfindungsgemäss ist die Beschichtung derart gewählt, dass ein Reibwert für einen Kontakt zwischen dem Zugmittel und der Beschichtung geringer ist als der entsprechende Reibwert für einen Kontakt zwischen dem Zugmittel und dem Träger.

Die Verwendung einer geeigneten Beschichtung erlaubt es, besonders geringe Reibwerte für einen Kontakt zwischen dem Zugmittel und der Rolle zu erzielen. Bei der Auswahl von Materialien, die als Beschichtung geeignet sind, sind nämlich weniger Restriktionen zu berücksichtigen, als bei der Auswahl des Trägers der Beschichtung. Beispielsweise bestimmt der Träger der Beschichtung im wesentlichen die mechanische Festigkeit der Rolle und somit die Grösse der maximalen Kraft, die von der Rolle aufgrund des Kontakts mit dem Zugmittel aufgenommen werden kann. Die Beschichtung hingegeben muss keinen substantiellen Beitrag zur mechanischen Stabilität der Rolle leisten und kann in erster Linie im Hinblick auf den Reibwert für einen Kontakt zwischen dem Zugmittel und der Beschichtung optimiert werde. Ausgehend von einem geeigneten Werkstoff für einen Träger kann deshalb in der Regel eine geeignete Beschichtung für den Träger gefunden werden, die im Vergleich mit dem unbeschichteten Träger eine reibungsvermindernde Wirkung gewährleistet.

Die reibungsvermindernde Wirkung hat u.a. den Effekt, dass bei einem Kontakt eines Zugmittels mit der Beschichtung solche Kräfte, die bei einer Bewegung des Zugmittels quer zur Bewegungsrichtung des Zugmittels wirken, reduziert sind, verglichen mit einem Kontakt zwischen dem Zugmittel und dem Träger. Wegen der Reduktion der quer zur Bewegungsrichtung wirkenden Kräfte wird das Zugmittel auf eine schonendere Weise an dem Rolle geführt als wenn keine Beschichtung vorhanden wäre. Die Reduktion ist umso grösser, je geringer der Reibwert für einen Kontakt zwischen dem Zugmittel und der Beschichtung ist.

Bevorzugt ist der Reibwert für einen Kontakt zwischen dem Zugmittel und der Beschichtung derart bemessen, dass bei einer Bewegung des Zugmittels relativ zur Rolle kein Torsionsmoment des Zugmittels um seine Längsrichtung erzeugbar ist, welches einen vorgegebenen, für eine Beschädigung des Zugmittels massgeblichen Grenzwert übersteigt. Dieses Kriterium ist insbesondere anwendbar auf Fälle, bei denen Seile mit einem runden Querschnitt als Zugmittel verwendet werden. Seile mit rundem Querschnitt können aufgrund ihrer Form besonders leicht um ihre Längsrichtung verdreht und dabei beschädigt werden. Ein Seil mit rundem Querschnitt ist an einer Rolle in der Regel nicht formschlüssig geführt. Wird ein Seil mit rundem Querschnitt an der Oberfläche einer Rolle, beispielsweise in einer Rille, unter einem Schrägzug geführt, dann kann das Seil an der Oberfläche der Rolle quer zur Längsrichtung des Seils rollen, d.h. eine Drehbewegung um die Längsrichtung ausführen. In der Regel sind in der Aufzugsanlage weitere Vorrichtungen vorhanden, die die Bewegungsfreiheit des Seils in der Umgebung der Rolle einschränken, beispielsweise Seilfixpunkte oder weitere Führungselemente, die die Bewegung des Seils in vorgegebenen Bahnen halten. Da das Seil demnach bei einer Bewegung in seiner Längsrichtung vorgegebenen Randbedingungen genügen muss, führt die genannte Drehbewegung an der Oberfläche der Rolle zu einer Torsion des Seils um seine Längsrichtung. Die Torsion des Seils kann unter Schrägzug bei einer Bewegung des Seils in seiner Längsrichtung stetig anwachsen, sofern das Seil an der Oberfläche der Rolle quer zu seiner Längsrichtung abrollen kann. Ist die Rolle erfindungsgemäss beschichtet und das Seil mit der Beschichtung in Kontakt gebracht, so kann eine derartige Torsion verhindert oder zumindest auf einen Maximalwert beschränkt werden, der umso geringer ist, je kleiner der Reibwert für den Kontakt zwischen dem Seil und der Rolle ist. Eine geringe Reibung zwischen dem Seil und Rolle verbessert die Möglichkeit, dass das Seil unter Schrägzug quer zur Längsrichtung des Seils gleitet - anstatt abzurollen. Dies limitiert die Torsion des Seils und wirkt einer Beschädigung des Seils aufgrund einer übermässigen Torsion entgegen.

Auf diese Wiese wird erreicht, dass auf das Zugmittel kein oder ein verhältnismässig geringes Torsionsmoment - bezogen auf die Längsrichtung des Zugmittels wirkt - wenn das Zugmittel schräg über die Rolle läuft und dabei in Kontakt mit der Beschichtung gebracht ist. Diese Konfiguration ist insbesondere vorteilhaft bei der Verwendung von Seilen, die eine grosse Empfindlichkeit gegenüber einem Schrägzug aufweisen und deshalb nicht durch grosse Torsionsmomente bezüglich ihrer Längsrichtung belastbar sind.

Bevorzugt wird der Reibwert für einen Kontakt zwischen dem Zugmittel und der Beschichtung derart gering bemessen, dass bei einer Bewegung des Zugmittels relativ zur Rolle keine Deformation des Zugmittels quer zu dessen Bewegungsrichtung erzeugbar ist, welche einen vorgegebenen, für eine Beschädigung des Zugmittels massgeblichen Grenzwert übersteigt. Ein niedriger Reibwert für einen Kontakt zwischen dem Zugmittel und der Beschichtung bietet die Voraussetzung dafür, dass bei einem Kontakt zwischen der Rolle und dem Zugmittel besonders geringe Kräfte auf das Zugmittel quer zu dessen Bewegungsrichtung wirken können. Dadurch sind Deformationen des Zugmittels quer zu dessen Bewegungsrichtung limitiert. Dies wirkt sich insbesondere schonend auf das Zugmittel aus, wenn die Rolle eine Rille aufweist, um das Zugmittel seitlich zu führen. Sind in diesem Fall die Kräfte, die quer zur Bewegungsrichtung des Zugmittels wirken, durch eine geeignete Beschichtung gemäss der Erfindung reduziert, dann sind auch die Anpresskräfte, die bei einem Kontakt zwischen einer Flanke der Rille und dem Zugmittel auftreten, reduziert. Dadurch werden Verschleisserscheinungen, die auf eine Wechselwirkung zwischen einer Rillenflanke und einem Zugmittel zurückzuführen sind, reduziert oder sogar vermieden. Die mechanische Wechselwirkung zwischen der Rillenflanke und dem Zugmittel kann an sich reduziert werden, wenn die Rillenflanke mit einer reibungsreduzierenden Beschichtung versehen wird. Dieses Kriterium ist u.a. auch anwendbar auf Fälle, bei denen Riemen oder Zwillingsseile als Zugmittel verwendet werden.

Riemen bzw. Zwillingsseile haben in der Regel keinen runden Querschnitt und können deshalb beim Umlauf um eine Rolle in einer an der Oberfläche der Rolle ausgebildeten Rille formschlüssig geführt werden, beispielsweise wenn die Form der Rille am Grund der Rille an die Form des Querschnitts des Riemens bzw. des Zwillingsseils angepasst ist.

Wird ein Zugmittel, beispielsweise ein Riemen oder ein Zwillingsseil, formschlüssig in einer Rille an der Oberfläche einer Rolle unter Schrägzug geführt, dann kann das Zugmittel quer zu seiner Längsrichtung nicht ohne Einschränkung an der Oberfläche der Rolle abrollen. Unter dieser Vorraussetzung wird das Zugmittel unter Schrägzug weniger durch eine Torsion beansprucht. Vielmehr ist das Zugmittel unter Schrägzug gezwungen, an Flanken der Rille quer zur Längsrichtung des Zugmittels zu gleiten. Dabei kann das Zugmittel deformiert werden. Es werden insbesondere die Bereiche des Zugmittels, die in Kontakt mit den Flanken der Rille gebracht werden, mechanisch beansprucht und gegebenenfalls verschlissen. Eine reibungsvermindernde Beschichtung der Rillenflanken gemäss der Erfindung reduziert eine derartige Beanspruchung und mindert bzw. verhindert einen Verschleiss des Zugmittels.

Das vorstehend genannte Konzept kann insbesondere vorteilhaft umgesetzt werden bei Umlenkrollen für das Zugmittel. Im Falle einer Umlenkrolle besteht keine Notwendigkeit, grosse Traktionskräfte zwischen der Rolle und dem Zugmittel zu übertragen. Der Reibwert für einen Kontakt zwischen dem Zugmittel und der Rolle kann deshalb so gering wie möglich gewählt werden. Eine Ausführungsform der erfindungsgemässen Vorrichtung umfasst deshalb eine oder mehrerer Umlenkrollen für das Zugmittel, wobei die Umlenkrolle eine erfindungsgemässe Beschichtung an allen Bereichen der Rolle aufweist, mit denen das Zugmittel in Kontakt steht bzw. im Betrieb in Kontakt bringbar ist. Eine solche Umlenkrolle erlaubt eine besonders schonende Führung der Zugmittel. Dies gilt sowohl für Seile als auch für Riemen. Dies gilt insbesondere für Zugmittel, die in einer Rille an der Rollenoberfläche geführt sind. Die Beschichtung stabilisiert ferner die seitliche Führung der Zugmittel. Beispielsweise kann das Herauswandern eines Zugmittels aus einer Rille vermieden werden. Dies ist insbesondere relevant für die Führung von Riemen, die in einer Rille an der Oberfläche einer Rolle laufen.

Gemäss der Erfindung ist es nicht zwingend, grundsätzlich an allen Bereichen einer Rolle, an denen das Zugmittel im Betrieb mit der Rolle in Kontakt gebracht wird, eine reibungsvermindernde Beschichtung anzuordnen. Je nach Anwendung kann es vorteilhaft sein, nur Teilbereiche eines Rollenkörpers mit einer reibungsvermindernden Beschichtung im Sinne der Erfindung zu bedecken. Abhängig von seiner momentanen Anordnung kann das Zugmittel gegebenenfalls mit der Beschichtung oder mit dem Rollenkörper in Kontakt gebracht werden. Alternativ können auch ein Teilabschnitt (oder mehrere Teilabschnitte) des Zugmittels mit dem Rollenkörper und ein anderer Teilabschnitt (oder mehrere andere Teilabschnitte) mit der Beschichtung in Kontakt gebracht werden. Auf diese Weise ist es möglich, abhängig von der relativen Anordnung des Zugmittels und der Rolle die Reibung zwischen dem Zugmittel und der Rolle gezielt zu variieren.

Bei einer Rolle, die eine Rille zur Führung eines Zugmittels aufweist, kann beispielsweise eine reibungsvermindernde Beschichtung gemäss der Erfindung lediglich an den Flanken einer Rille, die in einem Rollenkörper ausgebildet ist, angeordnet sein. In diesem Fall ist der Reibwert für einen Kontakt zwischen dem Zugmittel und der Rolle maximal, wenn das Zugmittel am Grund der Rille ausschliesslich mit dem Rollenkörper in Kontakt gebracht ist. Demgegenüber ist der Reibwert für einen Kontakt zwischen dem Zugmittel und der Rolle reduziert, wenn zumindest Teilabschnitte des Zugmittels - anstatt mit dem Rollenkörper in Kontakt zu stehen - mit der reibungsvermindernden Beschichtung an der Rillenflanke in Kontakt gebracht sind. Dieses Konzept der "selektiven Beschichtung" ist mit Vorteil insbesondere in Hinblick auf die Konstruktion von Treibrollen anwendbar. Auf dieser Grundlage lassen sich Treibrollen konstruieren, mit denen sich einerseits auf ein Zugmittel grosse Traktionskräfte übertragen lassen, die andererseits aber keine oder nur geringe Torsionsmomente auf das Zugmittel übertragen, wenn das Zugmittel schräg über die Rolle läuft. Dieses Konzept ist insbesondere vorteilhaft anwendbar bei Zugmitteln, die eine hohe Empfindlichkeit aufweisen gegenüber Verdrehungen um ihre Längsrichtung.

Erfindungsgemässe Beschichtungen sind auf verschiedene Weisen realisierbar. Beschichtungen, die sich einerseits auf einem geeigneten Träger aufbringen lassen und ausserdem einen Reibwert für einen Kontakt zwischen einem Zugmittel und der Beschichtung gewährleisten, der geringer ist als der entsprechende Reibwert für einen Kontakt zwischen dem Zugmittel und dem Träger, können beispielsweise Schmiermittel umfassen. Als Schmiermittel sind beispielsweise verschiedene Trockenschmiermittel oder verschiedene Nassschmiermitteln oder auch Mischungen dieser Schmiermittel verwendbar. Diese Schmiermittel können auch in geeigneten Bindemitteln eingebettet sein. Im letzteren Fall können Schmiermittel und Bindemittel gezielt so gewählt sein, dass das Bindemittel für eine ausreichende Stabilität der Beschichtung sorgt, während das Schmiermittel so gewählt werden kann, dass der Reibwert für einen Kontakt zwischen der Beschichtung und dem Zugmittel besonders gering ist.

Die Erfindung bringt wesentliche Vorteile bei Zugmitteln mit lasttragenden Organen, die eine Umhüllung aus einem Elastomer, beispielsweise Polyurethan oder Gummi, aufweisen. Derartige Umhüllungen sind einerseits kostengünstig herstellbar, beispielsweise durch Extrudieren im Falle von Polyurethan oder durch Vulkanisieren im Falle von Gummi. Zugmittel mit eine derartigen Umhüllung haben allerdings einen extrem hohen Reibwert für einen Kontakt mit Werkstoffen, aus denen gewöhnlich Rollen für Zugmittel für Aufzüge gefertigt werden, beispielsweise Stahl, Gusseisen, Polytetrafluorethylen (PTFE bzw. "Teflon") o.ä. Ein Zugmittel mit einem Mantel aus Polyurethan oder Gummi kann beispielsweise einen Reibwert im Bereich von 0.4-0.9 für einen Kontakt mit einer Rolle aus Stahl, Gusseisen, Polytetrafluorethylen (PTFE bzw. "Teflon") aufweisen. Wird die Rolle mit einer Beschichtung gemäss der Erfindung versehen, so kann der entsprechende Reibwert auf weniger als 0.2 reduziert werden. Dies kann beispielsweise erreicht werden mit einer Beschichtung auf Grundlage von Polytetrafluorethylen (PTFE bzw. "Teflon"). Eine derartige Verminderung des Reibwerts reduziert den Effekt eines Schrägzugs auf das Zugmittel erheblich. Dies ist insbesondere nützlich bei Zugmitteln, die besonders empfindlich bezüglich Schrägzug sind und unter einem Schrägzug besonders leicht beschädigt werden können, beispielsweise Zugmittel mit lasttragenden Organen aus Kunstfasern wie z.B. Aramid.

Im Folgenden werden weitere Einzelheiten der Erfindung und insbesondere vorteilhafte Ausführungsbeispiele der Erfindung erläutert anhand schematischer Zeichnungen. Es zeigen:
- Fig. 1:: Einen Aufzug zum Befördern einer Aufzugskabine und eines Gegengewichts mittels eines bewegbaren Zugmittels, mit einer Treibrolle und mehreren Umlenkrollen für das Zugmittel,
- Fig. 2A:: die Treibrolle gemäss Fig. 1, in einer Ansicht in Richtung des Pfeils 2A in Fig. 1, mit einem Seil als Zugmittel, wobei das Seil schräg über die Treibrolle läuft,
- Fig. 2B:: die Treibrolle gemäss Fig. 2A, aus einer anderen Perspektive gesehen (gemäss Pfeil 2B in Fig. 2A),
- Fig. 3:: einen Längsschnitt durch eine Rolle mit einer Beschichtung gemäss der Erfindung und einem um die Rolle laufenden Seil,
- Fig. 4:: einen Längsschnitt durch eine Rolle, wie in Fig. 3, jedoch mit einer anderen Anordnung einer Beschichtung gemäss der Erfindung,
- Fig. 5:: einen Längsschnitt durch eine Rolle mit einer Beschichtung gemäss der Erfindung und einem um die Rolle laufenden Riemen, wie in Fig. 5, jedoch mit einer anderen Form der Rolle und einer anderen Anordnung der Beschichtung,
- Fig. 6:: einen Längsschnitt durch eine Rolle mit einer Beschichtung gemäss der Erfindung und einem um die Rolle laufenden Riemen, wie in Fig. 5 oder Fig. 6, jedoch mit einer anderen Form der Rolle und einer anderen Anordnung der Beschichtung.

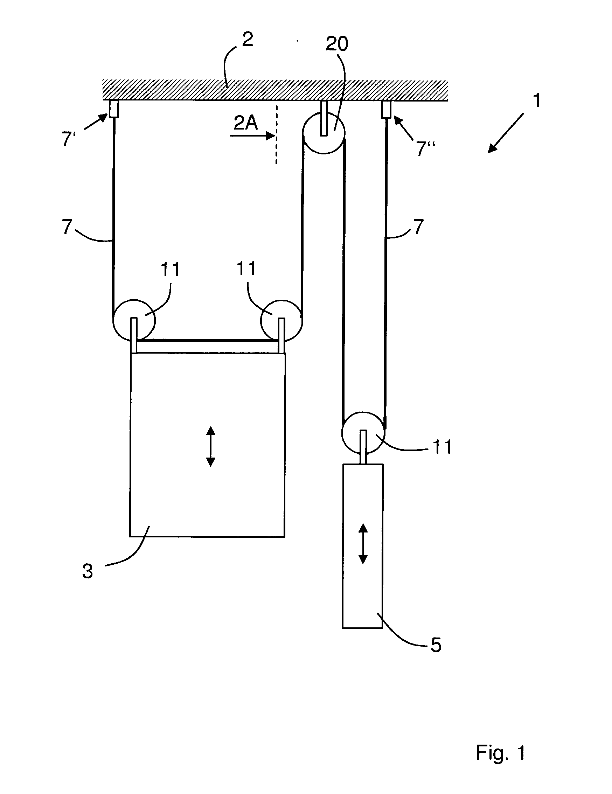

Fig. 1 zeigt - als ein Beispiel für eine Vorrichtung zum Befördern mindestens einer Last mit mindestens einem bewegbaren, mit der Last verbundenen Zugmittel - einen Aufzug 1. Der Aufzug 1 umfasst zwei mit einem Zugmittel 7 beförderbare Lasten: eine Aufzugskabine 3 und ein Gegengewicht 5. Zwei Enden 7', 7" des Zugmittels 7 sind an einer Deckenkonstruktion 2 befestigt. Das Zugmittel 7 ist über eine drehbar gelagerte Treibrolle 20 geführt, welche an der Deckenkonstruktion 2 - zusammen mit einem (nicht dargestellten) Antrieb für die Treibrolle 20 - angeordnet ist. Im vorliegenden Fall ist zwischen der Treibrolle 20 und jeweils einem der beiden Enden 7', 7" des Zugmittels 7 jeweils ein Längsabschnitt des Zugmittels 7 definiert, wobei der eine der beiden Längsabschnitte mit der Aufzugskabine 3 und der andere dieser Längsabschnitte mit dem Gegengewicht 5 verbunden sind. Dabei ist die Aufzugskabine 3 mittels zweier an der Aufzugskabine 3 drehbar angeordneten Umlenkrollen 11 in einer so genannten 2:1 Aufhängung mit dem Zugmittel 7 verbunden, während das Gegengewicht 5 mit einer am Gegengewicht 5 drehbar angeordneten Umlenkrolle 11 ebenfalls in einer 2:1 Aufhängung verbunden ist. Das Zugmittel 7 ist mit der Treibrolle 20 und den Umlenkrollen 11 so in Kontakt gebracht, dass verschiedene Abschnitte des Zugmittels jeweils einen Teil der Treibrolle 20 und jeweils Teile der Umlenkrollen 11 umschlingen. Indem die Treibrolle 20 in eine Rotation um Ihre Drehachse versetzt wird, sind Traktionskräfte auf das Zugmittel 7 übertragbar und das Zugmittel 7 in seiner Längsrichtung bewegbar, derart, dass die Längen der Längsabschnitte des Zugmittels 7, die zu beiden Seiten der Treibrolle 7 ausgebildet sind, veränderbar sind. Da die Aufzugskabine 3 und das Gegengewicht 5 an dem Zugmittel 7 mittels der Umlenkrollen 11 aufgehängt sind, bewirkt eine Rotation der Treibrolle 20, dass die Aufzugskabine 3 und das Gegengewicht 7 jeweils gegenläufig -je nach Drehrichtung der Treibrolle 11 - auf bzw. ab bewegt werden, wie in Fig. 1 durch Doppelpfeile angedeutet ist.

Das Zugmittel 7 ist bei einer Bewegung durch die Treibrolle 20 und die Umlenkrollen 11 geführt. Das Zugmittel 7 ist beispielsweise als Seil oder als Riemen realisierbar. Alternativ können die Aufzugskabine 3 und das Gegengewicht 5 auch an mehreren Zugmitteln 7, die jeweils über die Treibrolle 20 und die Umlenkrollen 11 geführt sind, aufgehängt sein.

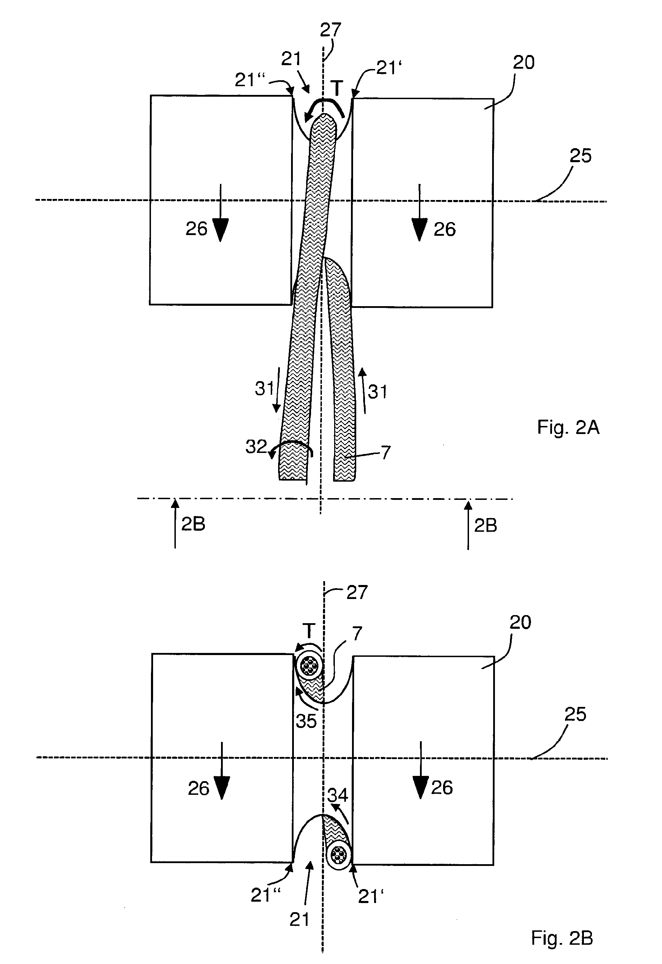

In Fig. 2A und 2B ist der Verlauf des Zugmittels 7 in der Umgebung der Treibrolle 20 detaillierter dargestellt. Fig. 2A zeigt dabei eine Ansicht in Richtung des Pfeils 2A in Fig. 1, d.h. in horizontaler Richtung, Fig. 2B hingegen zeigt eine Ansicht in Richtung der Pfeile 2B in Fig. 2A, d.h. in vertikaler Richtung von unten nach oben. Es ist angenommen, dass das Zugmittel 7 als ein Seil mit rundem Querschnitt ausgebildet ist und dass die Treibrolle 20 an ihrer Oberfläche eine Rille 21 aufweist. Die Rille ist symmetrisch zu einer Ebene 27, die senkrecht zur Drehachse 25 der Treibrolle 20 ausgerichtet ist, angeordnet. Die Position des Grundes der Rille 21 ist durch die Schnittlinie zwischen der Ebene 27 und der Treibrolle 20 definiert.

Die Fig. 2A und 2B stellen die Treibrolle in einem Zustand einer Rotation um die Achse 25 dar. Pfeile 26 geben die Richtung der Bewegung der jeweiligen dem Betrachter zugewandten Oberfläche der Treibrolle 20 an. Weiterhin ist angenommen, dass das Zugmittel 7 durch die Rille 21 geführt ist. Aufgrund der Rotation der Treibrolle 20 wird das Zugmittel 7 in seiner Längsrichtung, d.h. in Richtung der Pfeile 31 bewegt und entlang der Oberfläche der Treibrolle 20 durch die Rille 21 geführt. Weiterhin ist angenommen, dass das Zugmittel 7 - bedingt durch die relative Anordnung der Treibrolle 20 bzw. der Rille 21 bezüglich der Umlenkrollen 11 an der Aufzugskabine 3 und dem Gegengewicht 5 - nicht exakt parallel zur Ebene 27 geführt ist. Unter dieser Voraussetzung steht das Zugmittel 7 - beeinflusst durch die auf das Zugmittel 7 einwirkenden Zugkräfte - mit der Treibrolle 20 längs einer Kurve in Kontakt, die schräg bezüglich der Ebene 27 verläuft. Mit anderen Worten: in der vorliegenden Konfiguration steht das Zugmittel 7 unter Schrägzug. In der in Fig. 2A und 2B dargestellten Situation verläuft das Zugmittel 7 am obersten Punkt seiner Bahn am Grund der Rille, d.h. in der Mitte zwischen den angrenzenden Flanken der Rille, und durchkreuzt dort die Ebene 27 (siehe Fig. 2A). Wie ferner Fig. 2A und 2B zu entnehmen ist, trifft der in Richtung auf die Deckenkonstruktion 2 (nach oben) laufende Teilabschnitt des Zugmittels 7 an einem Rand 21' der Rille 21 auf die Oberfläche der Treibrolle 20 und nähert sich der Ebene 27 auf einer Flanke der Rille 21, wie durch den Pfeil 34 angedeutet ist. Der von der Deckenkonstruktion 2 weg (nach unten) laufende Teil des Zugmittels 7 entfernt sich von der Ebene 27 und nähert sich auf der anderen Flanke der Rille 21 dem anderen Rand 21" der Rille 21 an, wie durch den Pfeil 35 angedeutet ist.

Bei dem in den Fig. 2A und 2B dargestellten Umlauf um die Treibrolle kann das Zugmittel 7 unter Umständen dadurch deformiert werden, dass das Zugmittel 7 beim Umlauf um die Treibrolle 20 nicht nur eine Bewegung in Richtung seiner Längserstreckung ausführt, sondern aufgrund der Führung des Zugmittels 7 gezwungenermassen auch eine Bewegung in Richtung der Drehachse 25, d.h. quer zur Richtung der Längserstreckung des Zugmittels 7. Ob bzw. wie das Zugmittel 7 gegebenenfalls deformiert wird, hängt ausser von bestimmten Eigenschaften des Zugmittels 7 selbst - beispielsweise der Form und der elastischen Eigenschaften des Zugmittels 7 - insbesondere von der Reibung zwischen dem Zugmittel 7 und der Oberfläche, mit der das Zugmittel 7 in Kontakt steht, ab. Ist diese Reibung beispielsweise gering, dann kann das Zugmittel 7 bei seiner Bewegung in Richtung der Drehachse 25 gleiten, ohne dass das Zugmittel 7 quer zu seiner Längserstreckung wesentlich deformiert wird. Ist die Reibung extrem gross, dann kann das Zugmittel 7 längs eines Teilabschnitts an der Oberfläche der Treibrolle 20 haften und auf den vorliegenden Schrägzug mit einer Deformation quer zur Längserstreckung des Zugmittels reagieren. Diese Deformation ist in der Regel dadurch limitiert, dass übermässige elastische Spannungen im Zugmittel 7 durch Bewegungen von Teilabschnitten des Zugmittels 7 relativ zur Oberfläche der Treibrolle 20 abgebaut werden können - beispielsweise durch Gleitbewegungen der jeweiligen Teilabschnitte oder auch Drehbewegungen dieser Teilabschnitte um ihre jeweilige Längsrichtung.

Im Beispiel gemäss Fig. 2A und 2B ist angenommen, dass der Reibwert für einen Kontakt zwischen dem Zugmittel 7 und der Treibrolle 20 derart gross ist, dass das Zugmittel 7 nicht ohne Widerstand in Richtung der Drehachse 25 bzw. in Richtung der Pfeile 34 und 35 gleiten kann. Diese Annahme ist kompatibel mit dem Erfordernis, dass mit der Treibrolle 20 - ihrer Funktion im Aufzug 1 entsprechend - grosse Traktionskräfte auf das Zugmittel 7 übertragen werden sollen. Im vorliegenden Fall ist die Bewegung des Zugmittels 7 längs der Pfeile 34 und 35 -je nach Grösse des Reibwerts für einen Kontakt zwischen dem Zugmittel 7 und der Treibrolle 20 - mit einer Rollbewegung oder einer Überlagerung einer Rollbewegung und einer Gleitbewegung verbunden. Die Rollbewegung wird im vorliegenden Fall durch die runde Form des Querschnitts des Zugmittels 7 begünstigt. Weiterhin wird die Rollbewegung dadurch begünstigt, dass das Zugmittel 7 am Grund der Rille 21 nicht formschlüssig geführt ist. Aufgrund der Rollbewegung wird das Zugmittel 7 um seine Längsrichtung gedreht. Die Richtung der Drehung ist in Fig. 2A durch einen Pfeil 32 angegeben.

Im vorliegenden Fall erstreckt sich eine Drehung des Zugmittels 7, die an der Treibrolle 20 während einer Rotation der Treibrolle 20 erzeugt wird, nicht gleichmässig über die gesamte Länge des Zugmittels 7. Das Zugmittel 7 ist nämlich nicht über die gesamte Länge frei drehbar, weil eine Drehung des Zugmittels 7 um seine Längsrichtung an mehreren Stellen eingeschränkt bzw. verhindert ist, beispielsweise an den Enden 7', 7" des Zugmittels 7 aufgrund der Befestigung des Zugmittels 7 an der Deckenkonstruktion 2 oder an den Umlenkrollen 11 aufgrund einer Reibung zwischen dem Zugmittel 7 und den Umlenkrollen 11. Demzufolge verursacht eine Rotation der Treibrolle 20 eine Torsion des Zugmittels um seine Längsrichtung.

Im Falle der in Fig. 2A und 2B dargestellten Situation ist die Drehung des Zugmittels 7 in Richtung des Pfeils 32 charakterisiert durch ein Torsionsmoment T, dessen Richtung in Fig. 2A und 2B jeweils durch Pfeile angedeutet ist.

Im Falle der Fig. 2A und 2B ist der Effekt eines Schrägzugs auf das Zugmittel 7 beispielhaft anhand der Treibrolle 20 dargestellt. Es sei darauf hingewiesen, dass die dargestellten technischen Zusammenhänge analog übertragbar sind auf die Bewegung des Zugmittels 7 an den Umlenktrollen 11. Ferner sei darauf hingewiesen, dass für das Auftreten der Verdrehung 32 das Vorhandensein der Rille 21 keine notwendige Voraussetzung ist. Eine hinreichende Bedingung für das Auftreten einer Verdrehung des Zugmittels 7 ist das Vorliegen von Schrägzug. Allgemein steht das Zugmittel 7 unter Schrägzug, wenn das Zugmittel 7 im Aufzug 1 derart geführt ist, dass es bei einer Bewegung in seiner Längsrichtung im Kontakt mit den Rollen 11 bzw. 20 wenigstens abschnittsweise in der Richtung einer der Drehachsen der Rollen 11 bzw. 20 bewegt wird.

Die Torsion des Zugmittels 7 aufgrund der Wechselwirkung des Zugmittels 7 mit den Rollen 11 und 20 hängt quantitativ von mehreren Faktoren a)-c) ab:
a) von den jeweiligen Reibwerten für die Kontakte des Zugmittels 7 mit den Rollen 11 und 20,
b) von der Torsionssteifigkeit des Zugmittels 7,
c) von dem "Ausmass" des Schrägzuges an jeder einzelnen Rolle, beispielsweise charakterisiert durch den Winkel zwischen der Drehachse der jeweiligen Rolle und dem Verlauf der Längsrichtung des Zugmittels 7 längs der Oberfläche der Rolle (ist dieser Winkel an allen Stellen, an denen das Zugmittel 7 mit der Rolle in Kontakt gebracht ist, gleich 90°, dann liegt kein Schrägzug vor, d.h. das Zugmittel 7 bewegt sich an der Oberfläche der Rolle innerhalb einer Ebene senkrecht zur Drehachse der Rolle; je grösser die Abweichung dieses Winkels von 90° ist an einem ausgewählten Längsabschnitt des Zugmittels 7 an der Oberfläche der Rolle, desto stärker ist der Schrägzug ausgeprägt).

Der obige Faktor b) ist häufig festgelegt durch Erfordernisse, die an das Zugmittel 7 selbst gerichtet sind (beispielsweise im Hinblick auf die Materialwahl, den Aufbau, die mechanischen und thermischen Eigenschaften, etc.). Der obige Faktor c) ist häufig festgelegt durch Parameter, die den Design des Aufzugs 1 betreffen (beispielsweise durch die räumliche Anordnung der Komponenten des Aufzugs, die der Führung des Zugmittels 7 dienen, und durch die Genauigkeit, mit denen diese Komponenten gefertigt und/oder installiert werden).

Die Erfindung setzt beim obigen Faktor a) an: Gemäss der Erfindung können Rollen, mit denen ein Zugmittel in Kontakt gebracht ist, um das Zugmittel zu führen, mit einer reibungsvermindernden Beschichtung versehen werden. Angewendet auf die Beispiele gemäss der Fig. 1, 2A und 2B erlaubt es die Erfindung, die Reibwerte für die Kontakte des Zugmittels 7 mit den Rollen 11 und 20 zu reduzieren. Dadurch ist es möglich, durch Schrägzug verursachte Torsionsmomente zu reduzieren bzw. zu minimieren. Im besten Fall kann eine Torsion des Zugmittels vermieden werden.

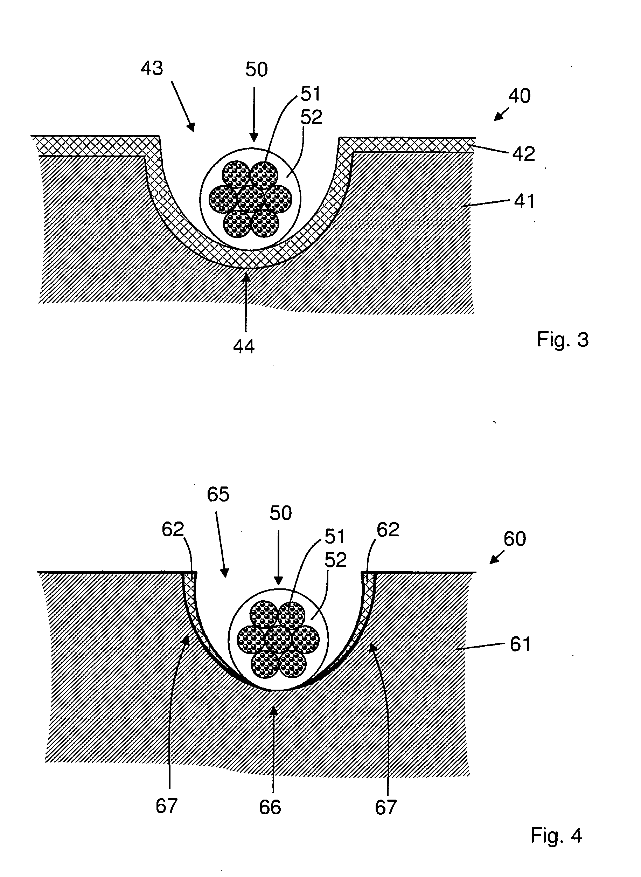

Die Fig. 3 und 4 zeigen Beispiele für Rollen, die eine Beschichtung gemäss der Erfindung aufweisen, jeweils zusammen mit einem Zugmittel 50, das an einer Oberfläche der jeweiligen Rolle geführt ist. Die gezeigten Rollen eignen sich für den Einsatz im Aufzug 1 als Ersatz für die Rollen 11 bzw. 20.

Das Zugmittel 50 ist in den vorliegenden Beispielen ein Seil mit rundem Querschnitt. Es umfasst mehrere lasttragende Organe 51, die miteinander verseilt sind und von einer Umhüllung in Form eines Mantels 52 umgeben sind. Die lasttragenden Organe 51 können auf verschiedene Weisen realisiert sein. Die lasttragenden Organe 51 können beispielsweise Naturfasern und/oder Fasern aus einem synthetischen Material, beispielsweise aus Aramid, und/oder mindestens einen metallischen Draht enthalten. Der Mantel 52 kann beispielsweise aus einem Elastomer wie Polyurethan oder Natur- oder Kunstgummi (EPR) oder Silikongummi gebildet sein. Es sei allerdings darauf verwiesen, dass die hier gezeigte Struktur des Zugmittels 50 für die Ausführung der Erfindung keine Einschränkung dargestellt. Das Zugmittel 50 könnte auch durch anderen Arten von Seilen oder durch Riemen ersetzt werden.

Fig. 3 zeigt einen Längsschnitt einer Rolle 40 entlang der (nicht dargestellten) Drehachse dieser Rolle zusammen mit einem Querschnitt durch das Zugmittel 50. Die Rolle 40 umfasst einen Rollenkörper 41, der als Träger für eine Beschichtung 42 dient. Die Beschichtung 42 bildet eine Oberfläche der Rolle 40. An der Oberfläche der Rolle 40 ist eine Rille 43 ausgebildet. Die Rille 43 verläuft entlang einer Ebene, welche senkrecht zur Drehachse der Rolle 40 angeordnet ist, und weist einen Querschnitt mit einer Abrundung am Grund 44 der Rille auf. Im vorliegenden Fall bildet die Beschichtung 42 eine geschlossene Bedeckung des Rollenkörpers 41 im Bereich der Rille 43, d.h. die Oberfläche der Rolle 40 ist sowohl am Grund 44 der Rille 43 als auch an den Flanken der Rille 43 durch die Beschichtung 42 gebildet. In Fig. 3 ist das Zugmittel 50 durch die Rille 43 geführt. Im vorliegenden Fall ist das Zugmittel 50 in der Rille 43 ausschliesslich in einen Kontakt mit der Beschichtung 42 bringbar. Ein Kontakt mit dem Rollenkörper 41 ist nicht möglich.

Fig. 4 zeigt einen Längsschnitt einer Rolle 60 entlang der (nicht dargestellten) Drehachse dieser Rolle zusammen mit einem Querschnitt durch das Zugmittel 50. Die Rolle 60 umfasst einen Rollenkörper 61, der als Träger für eine Beschichtung 62 dient. An der Oberfläche der Rolle 60 ist eine Rille 65 ausgebildet. Die Rille 65 verläuft entlang einer Ebene, welche senkrecht zur Drehachse der Rolle 60 angeordnet ist, und weist einen Querschnitt mit einer Abrundung am Grund 66 der Rille auf. Die Beschichtung 62 bildet eine Oberfläche der Rolle 60 an Flanken 67 der Rille 65. Die Oberfläche der Rolle 60 ist am Grund 66 der Rille 65 durch den Rollenkörper 61 gebildet. In Fig. 4 ist das Zugmittel 50 durch die Rille 65 geführt. Im vorliegenden Fall ist das Zugmittel 50 am Grund 66 in Kontakt mit dem Rollenkörper 62 und an den Flanken 67 in Kontakt mit der Beschichtung 62 bringbar.

Die Rollenkörper 41 und 61 können beispielsweise aus Stahl, Gusseisen, Polyamid, Teflon, Aluminium, Magnesium, Buntmetallen, Polypropylen, Polyethylen, PVC, Polyimide, Polyetherimide, EthylenPropylenDienMonomer (EPDM) oder Polyetheretherketon (PEEK) gefertigt sein. Diese Materialien sind aufgrund ihrer Festigkeit geeignet als Werkstoffe für Rollen, die für den Einsatz in Aufzugsanlagen oder anderen Vorrichtungen zur Beförderung von Lasten vorgesehen sind.

Die Beschichtung 42 bzw. die Beschichtung 62 soll gemäss der Erfindung das Kriterium erfüllen, dass ein Reibwert für einen Kontakt zwischen dem Zugmittel 50 und der Beschichtung 42 bzw. die Beschichtung 62 geringer ist als der entsprechende Reibwert für einen Kontakt zwischen dem Zugmittel 50 und dem Rollenkörper 41 bzw. dem Rollenkörper 61.

Das vorstehend genannte Kriterium kann auf verschiedene Weisen erfüllt werden. Die Beschichtung 42 bzw. die Beschichtung 62 kann aus einem geeigneten Schmiermittel gebildet sein bzw. ein solches Schmiermittel als Bestandteil enthalten. Im vorliegenden Fall sind als Schmiermittel verschiedene Trockenschmiermittel, Nassschmiermittel oder Mischungen dieser Schmiermittel geeignet. Die Beschichtungen 42 und 62 können beispielsweise aus Trockenschmiermitteln wie Talkum, Graphitpulver, Molybdändisulfid, Polytetrafluorethylen (PTFE), Blei (Pb), Gold (Au), Silber (Ag), Bortrioxid (BO₃), Bleioxid (PbO), Zinkoxid (ZnO), Kupferoxid (Cu₂O), Molybdäntrioxid (MoO₃), Titandioxid (TiO₂) oder Mischungen dieser Substanzen gebildet sein. Diese Materialien lassen sich durch bekannte Verfahren auf die Rollenkörper 41 bzw. 61 aufbringen, beispielsweise durch Sputtern, Aufdampfen, mechanische Pressverfahren oder chemische Verfahren.

Die Beschichtungen 42 bzw. 62 können auch aus Nassschmiermitteln wie beispielsweise tierisches- , pflanzliches-, petrochemisches- und/oder synthetisches Öl bzw. Fett, Glyzerin, Polybuten, Polymeresther, Polyolefine, Polyglykole, Silikon, Seife, natürliche- bzw. künstliche Wachse, Harze und/oder Teere zusammen mit Zusätzen von organischen oder anorganischen Verdickungsstoffen wie z.B. Polymere, Polyharnstoff, Metallseifen, Silikate, Metalloxide, Kieselsäure, organophile Bentonite oder Mischungen dieser Substanzen gebildet sein. Es ist auch möglich, Trockenschmiermittel in der Form von Partikeln und/oder Nassschmiermittel mit aushärtbaren Bindemitteln zu mischen und aus solchen Mischungen die Beschichtungen 42 bzw. 62 zu bilden. Im letzteren Fall kann durch eine geeignete Auswahl des jeweiligen Bindemittels die Beständigkeit der Beschichtung optimiert werden, während die gewünschte reibungsreduzierende Wirkung durch eine geeignete Auswahl der jeweiligen Schmiermittel gezielt herbeigeführt werden kann. Als Bindemittel sind verschiedene bekannte Stoffe geeignet, beispielsweise Lacke auf der Basis von Kunstharz, Acryl, Polyester, Vinylester, Polyurethan, Epoxid oder Ähnliches.

Das Zugmittel 50 hat - ausgestattet mit einem Mantel aus Polyurethan oder Gummi - einen Reibwert im Bereich von 0.4-0.9 für einen Kontakt mit einem Rollenkörper aus üblichen Materialien wie Stahl, Gusseisen, Polytetrafluorethylen (PTFE bzw. "Teflon"). Wird die Oberfläche der Rolle mit einer Beschichtung gemäss der Erfindung versehen, so kann der entsprechende Reibwert für einen Kontakt zwischen dem Zugmittel 50 und der Rolle auf weniger als 0.2 reduziert werden. Beispielsweise lässt sich mit einer Beschichtung mit einem Trockenschmiermittel auf der Basis von Polytetrafluorethylen-Partikeln und einem geeigneten Bindemittel (beispielsweise mit einer Schichtdicke im Bereich zwischen 0.01 mm und 1 mm) eine Reduktion des Reibwerts auf 0.19 erzielen. Dies gilt auch für einen Rollenkörper, der selbst aus Polytetrafluorethylen gefertigt ist. Das Mass der Reduktion des Reibwerts kann variieren, beispielsweise abhängig von Materialparametern der Polytetrafluorethylen-Partikel, die durch die Art und Weise der Herstellung der Partikel beeinflusst werden (Grösse der Partikel, Länge der Polymerketten, etc.).

Im Fall der Rolle 40 (Fig. 3) bewirkt die Beschichtung 42 eine Reduktion des Reibwerts für einen Kontakt zwischen dem Zugmittel 50 und der Rolle 40 an allen Stellen, an denen das Zugmittel in der Rille 43 mit der Rolle 40 in Kontakt gebracht werden kann, verglichen mit einem entsprechenden Kontakt des Zugmittels 50 mit dem unbeschichteten Rollenkörper 41. Die Beschichtung 42 verbessert die Fähigkeit des Zugmittels 50, innerhalb der Rille 43 in der Querrichtung der Rille 43 zu gleiten. Dadurch ist die Gefahr reduziert, dass das Zugmittel bei einem Schrägzug durch die Rille 43 an den Flanken der Rille 43 abrollt, anstatt zu gleiten. Demnach ist auch die Gefahr, dass das Zugmittel 50 bei einem Schrägzug an der Rolle 40 durch eine Torsion deformiert wird, reduziert. Eine Torsion des Zugmittels 50 kann auch vermieden werden, vorausgesetzt, der Reibwert für einen Kontakt zwischen dem Zugmittel 50 und der Rolle 40 ist gering genug. Die Beschichtung 42 bewirkt allerdings auch eine Reduktion der Traktionskräfte zwischen dem Zugmittel 50 und der Rolle 40, wenn das Zugmittel durch die Rille 43 geführt ist. Die Rolle 40 ist deshalb bevorzugt als Umlenkrolle verwendbar.

Im Fall der Rolle 60 variiert der Reibwert für einen Kontakt zwischen dem Zugmittel 50 und der Rolle 60 innerhalb der Rille 65 in der Querrichtung der Rille 65. Der Reibwert ist maximal, wenn das Zugmittel 50 am Grund 66 der Rille 65 mit dem Rollenkörper 61 in Kontakt gebracht ist. Die Beschichtung 62 verbessert die Fähigkeit des Zugmittels 50, innerhalb der Rille 65 in der Querrichtung der Rille 65 zu gleiten. Dadurch ist die Gefahr reduziert, dass das Zugmittel bei einem Schrägzug durch die Rille 65 an den Flanken 67 der Rille 65 abrollt, anstatt zu gleiten. Demnach ist auch die Gefahr, dass das Zugmittel 50 bei einem Schrägzug an der Rolle 60 durch eine Torsion deformiert wird, reduziert.

Eine Torsion des Zugmittels 50 kann auch vermieden werden, beispielsweise wenn der Reibwert für einen Kontakt zwischen dem Zugmittel 50 und der Rolle 60 derart gering ist, dass das Zugmittel 50 an den Flanken 67 ausschliesslich gleitet. Da der Reibwert für den Kontakt zwischen dem Zugmittel 50 und der Rolle 60 dem Reibwert für den Kontakt zwischen dem Zugmittel 50 und dem Rollenkörper 61 entspricht, wenn dass Zugmittel 50 entlang des Grundes 66 der Rille 65 geführt ist, ist es möglich, mit der Rolle 60 grosse Traktionskräfte zwischen der Rolle 60 und dem Zugmittel 50 zu übertragen. Die Rolle 60 ist deshalb sowohl als Umlenkrolle als auch als Treibrolle verwendbar.

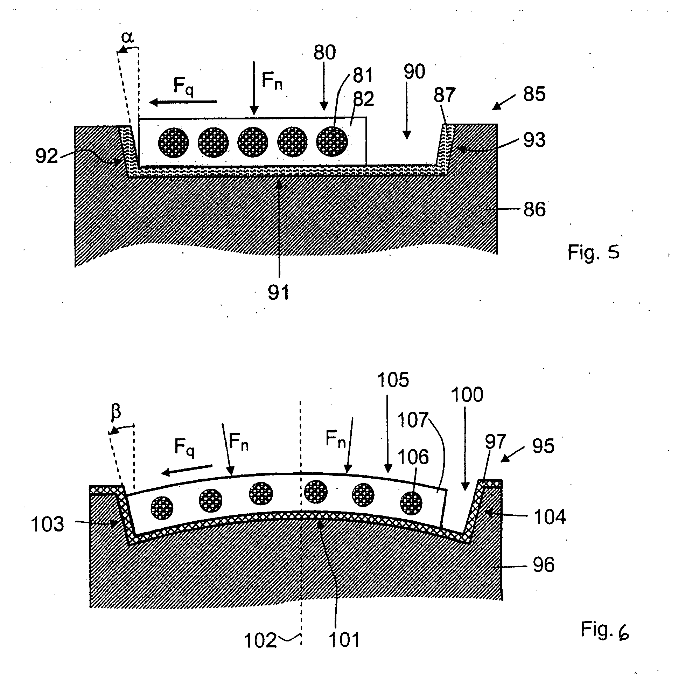

Die Fig. 5-6 zeigen verschiedene Rollen 85 und 95, die speziell zur Führung von Zugmitteln in Form von Riemen ausgebildet sind und deshalb jeweils eine Form aufweisen, die an die äussere Form von Riemen angepasst sind. Die Rollen weisen jeweils Beschichtungen gemäss der Erfindung auf. Im Folgenden wird der Effekt dieser Beschichtungen auf verschiedene Riemen, die mit diesen Beschichtungen in Kontakt stehen und an den Oberflächen der jeweiligen Rollen geführt werden, diskutiert.

Die Fig. 5-6 stellen - jeweils im Querschnitt - Riemen 80 und 105 bei einem Umlauf um eine der Rollen 85 bzw. 95. Jede der Rollen 85 bzw. 95 ist dabei in einem Längsschnitt entlang ihrer (jeweils nicht dargestellten) Drehachse gezeigt. Es ist jeweils angenommen, dass die jeweiligen Rollen und Riemen Bestandteile einer erfindungsgemässen Vorrichtung zum Befördern einer Last mit Hilfe der genannten Riemen ist, wobei die übrigen Bestandteile dieser Vorrichtung allerdings nicht dargestellt sind.

Die Riemen 80 und 105 bzw. unterscheiden sich von dem Zugmittel 50 im wesentlichen durch die Form eines Querschnitts: Im Gegensatz zum Zugmittel 50 haben die Riemen 80 und 105 einen rechteckigen Querschnitt. Die Riemen 80 und 105 sind jeweils derart geführt, dass eine ihrer breiten Seiten auf den jeweiligen Rollen aufliegen.

Der Riemen 80 weist mehrere in seiner Längsrichtung verlaufende lasttragende Organe 81 und einen die lasttragenden Organe 81 umgebenden Mantel 82 auf. Der Riemen 105 hat einen ähnlichen Aufbau: er weist mehrere in seiner Längsrichtung verlaufende lasttragende Organe 106 und einen die lasttragenden Organe 106 umgebenden Mantel 107 auf. Im Hinblick auf die Werkstoffe haben die Riemen 80 und 105 keine Besonderheiten gegenüber dem Zugmittel 50: für die lasttragenden Organe 81 und 106 gelten deshalb die Erwägungen, die für die lasttragenden Organe 51 angegeben sind, und für die Mäntel 82 und 107 sind deshalb die Angaben anwendbar, die für den Mantel 52 spezifiziert sind.

Die Rollen 85 und 95 weisen an ihren Oberflächen jeweils eine Rille 90 bzw. 100 zur Führung eines der Riemen 80 bzw. 105 auf. Die Rillen 90 und 100 unterscheiden sich im wesentlichen durch ihre Form (in einem ebenen Schnitt längs der Drehachse der jeweiligen Rolle) und durch unterschiedliche Anordnungen von Beschichtungen 87 und 97 gemäss der Erfindung.

Gemäss Fig. 5 umfasst die Rolle 85 einen Rollenkörper 86 und die Beschichtung 87. Die Rille 90, die an der Oberfläche der Rolle 85 ausgebildet ist, hat einen Grund 91, welcher in Richtung der Drehachse der Rolle 85 keinerlei Krümmung aufweist und deshalb in der Fig. 5 durch eine gerade Linie repräsentiert ist. Die Rille 90 weist Flanken 92 und 93 auf, welche die Form eines Kegelstumpfes haben und in der Fig. 5 durch Linien dargestellt sind, die den Neigungswinkel α bezüglich einer senkrecht zur Drehachse der Rolle 85 ausgerichteten Ebene aufweisen. Die Beschichtung 87 bedeckt den Rollenkörper 86 am Grund 91 und den Flanken 92 und 93 der Rille 90. Der Riemen 80 ist in der Rille 90 derart geführt, dass eine seiner breiten Seiten auf dem Grund 91 der Rille aufliegt. Der Riemen 80 ist deshalb am Grund 91 und den Flanken 92 und 93 der Rille 90 ausschliesslich mit der Beschichtung 87, nicht aber mit dem Rollenkörper 86 in Kontakt bringbar.

Gemäss Fig. 6 umfasst die Rolle 95 einen Rollenkörper 96 und die Beschichtung 97. Die Rille 100, die an der Oberfläche der Rolle 95 ausgebildet ist, hat einen Grund 101, welcher - betrachtet in einem Schnitt in einer Ebene entlang der Drehachse der Rolle 95 - durch eine konvex gekrümmte Linie repräsentiert ist. Da der Grund 101 in Richtung der Drehachse der Rolle 95 gekrümmt ist, haben Querschnitte der Rolle 95 senkrecht zur Drehachse der Rolle 95 im Bereich des Grundes 101 unterschiedlich lange Umfangslinien. In Fig. 6 ist durch eine Linie 102 die Lage des Querschnitts mit der längsten Umfangslinie innerhalb der Rille 100 markiert. Die Rille 100 weist Flanken 103 und 104 auf, welche die Form eines Kegelstumpfes haben und in der Fig. 6 durch Linien dargestellt sind, die den Neigungswinkel β bezüglich einer senkrecht zur Drehachse der Rolle 95 ausgerichteten Ebene aufweisen. Die Beschichtung 97 bedeckt den Rollenkörper 96 am Grund 101 und den Flanken 103 und 104 der Rille 100 und zusätzlich ausserhalb der Rille 100. Der Riemen 105 ist in der Rille 100 derart geführt, dass eine seiner breiten Seiten auf dem Grund 101 der Rille aufliegt. Der Riemen 105 ist deshalb am Grund 101 und an den Flanken 103 und 104 der Rille 100 und in der unmittelbaren Umgebung der Rille 100 ausschliesslich mit der Beschichtung 97, nicht aber mit dem Rollenkörper 96 in Kontakt bringbar.

Im Hinblick auf die Werkstoffe, aus denen die Rollenkörper 86 und 96 herstellbar sind, gelten die Erwägungen, die bezüglich der Rollenkörper 41 und 61 angegeben sind. Im Hinblick auf die Werkstoffe für die Beschichtungen 87 und 97 sind die Spezifikationen, die für die Beschichtungen 42 und 62 angegeben sind, analog anwendbar.

Die Breite der Rille 90 (gemessen in Richtung der Drehachsen der Rolle 85) ist jeweils grösser als die Breite des Riemens 80 gewählt. Entsprechend ist die Breite der Rille 100 (gemessen in Richtung der Drehachse der Rolle 95) grösser als die Breite des Riemens 105 gewählt.

Dadurch, dass die Riemen 80 und 105 jeweils in Rillen geführt sind, die breiter sind als die jeweiligen Riemen, ist für den Riemen 80 in der Rille 90 und für den Riemen 105 in der Rille 100 ein Bewegungsspielraum quer zur jeweiligen Rille gegeben. Dieser Bewegungsspielraum ist aus mehreren Gründen erwünscht. Einerseits ist auf diese Weise bei der Installation der Rollen eine gewisse (erwünschte) Toleranz insbesondere im Hinblick auf die Genauigkeit der Positionierung der Rollen gewährleistet, was die Installation vereinfacht. Weiterhin ist zu berücksichtigen, dass die Riemen 80 und 105 - wie bei Riemen allgemein üblich - aufgrund der Eigenschaften der verwendeten Werkstoffe und der Charakteristiken der Verfahren zur Herstellung der Riemen nicht homogen sind: die mechanischen Eigenschaften eines Riemens variieren in der Regel im Rahmen gewisser Toleranzen sowohl in der Längsrichtung als auch in der Querrichtung des Riemens. Aufgrund solcher Inhomogenitäten neigt jeder Riemen bei einem Umlauf um eine Rolle unter einem Zug in der Längsrichtung des Riemens dazu, auf der Oberfläche der Rolle Bewegungen in der Querrichtung des Riemens auszuführen. Diese Querbewegungen gehen einher mit dem Ausgleich von elastischen Spannungen, die im Riemen beim Umlauf um die Rolle unter der Wirkung des Zuges entstehen. Die Querbewegungen des Riemens an der Oberfläche der Rolle sind dabei jeweils in Beziehung zu setzen mit einer Querkraft Fq, die quer zur Längsrichtung des Riemens wirkt und in Abhängigkeit von den momentanen elastischen Spannungen im Riemen variieren kann. Würde der Riemen durch eine Rille geführt, deren beiden Flanken jeweils die Schmalseiten des Riemens berühren, dann würden einerseits die Querbewegungen des Riemens unterdrückt, andererseits würde aber der Riemen unter der Wirkung der Querkraft Fq mit den Flanken der Rille in Wechselwirkung treten. Diese Wechselwirkung fördert den Verschleiss des Riemens. Weiterhin kann der Riemen, wenn er unter der Wirkung Querkraft Fq an eine Flanke der Rille gedrückt wird, in der Querrichtung elastisch deformiert werden. Unter Umständen kann der Riemen unter der Wirkung Querkraft Fq gezwungen werden, zum Ausgleich elastischer Spannungen über die Flanke der Rille hinauszuwandern. Dies kann bei einem Betrieb der Vorrichtung zu einer unvorhergesehenen Unterbrechung des Betriebs führen.

Um den Verschleiss eines Riemens zu minimieren, ist es deshalb sinnvoll, die Abstände der Flanken der Rille 90 bzw. der Rille 100 grösser zu wählen als die Breite des Riemens 80 bzw. des Riemens 105. Dadurch, dass die Riemen jeweils bei einem Umlauf um die jeweiligen Rollen im Rahmen bestimmter Toleranzen Bewegungen in ihrer Querrichtung ausführen können, sind die Schmalseiten der Riemen nicht ständig in Kontakt mit einer der Flanken der Rillen. Weiterhin ist eine Bewegung des Riemens in seiner Querrichtung meist mit einer Reduktion der Querkraft Fq verbunden. Auf diese Weise wird der Verschleiss der Riemen reduziert.

Da die Riemen 80 und 105 in den Rillen 90 und 100 Querbewegungen ausführen können, ist es möglich, dass die Riemen beim Umlauf um die Rollen 85 und 95 Lagen einnehmen, in denen sie unter einem Schrägzug stehen.

Die Erfindung eröffnet eine Möglichkeit, die auf einen der Riemen 80 bzw. 105 beim Umlauf um eine der Rollen 85 oder 95 wirkende Querkräfte Fq zu minimieren und somit die Riemen 80 und 105 besonders schonend und sicher zu führen. Es zeigt sich, dass die auf einen der Riemen beim Umlauf um eine der Rollen wirkende Querkraft F_{q} umso grösser ist, je grösser die Reibung zwischen dem Riemen und der jeweiligen Rolle ist. Die Reibung ist proportional zu der jeweiligen Normalkraft Fₙ, die auf Riemen senkrecht zur Oberfläche der jeweiligen Rolle wirkt, und zu dem Reibwert für einen Kontakt zwischen dem Riemen und der jeweiligen Rolle.

In den Beispielen gemäss Fig. 5-6 ist die Normalkraft Fₙ zwischen dem Riemen 80 und der Rolle 85 und zwischen dem Riemen 105 und der Rolle 95 jeweils vorgegeben durch die jeweiligen auf die Riemen wirkenden Zugkräfte und die räumliche Anordnung der Riemen und der Rollen. Gemäss der Erfindung wird die jeweilige auf die Riemen 80 und 105 wirkende Querkraft Fq dadurch minimiert, dass der Reibwert für einen Kontakt zwischen den Riemen 80 und 105 und einer der Beschichtungen 87 und 97 geringer ist als der entsprechende Reibwert für einen Kontakt zwischen den Riemen 80 und 105 und den Rollenkörpern 86 und 96. Da der Riemen 80 bei einem Umlauf um die Rolle 85 immer mit der Beschichtung 87 in Kontakt gebracht ist, ist die auf den Riemen 80 wirkende Querkraft F_{q} in der Rille 90 grundsätzlich reduziert, verglichen mit dem Fall, dass die Rolle 85 die Beschichtung 87 nicht aufweist. Da der Riemen 105 bei einem Umlauf um die Rolle 95 immer mit der Beschichtung 97 in Kontakt gebracht ist, ist die auf den Riemen 105 wirkende Querkraft F_{q} in der Rille 100 grundsätzlich reduziert, verglichen mit dem Fall, dass die Rolle 95 die Beschichtung 97 nicht aufweist.

Die Rillen 90 und 100 unterscheiden sich im Hinblick auf ihre Form und die jeweilige Anordnung der Beschichtungen 87 und 97 gemäss der Erfindung. Die Rillen 90 und 100 haben deshalb einen unterschiedlichen Einfluss auf die Führung der Riemen 80 bzw. 105.

Im Folgenden wird (beispielshalber) angenommen, dass die Beschichtungen 87 und 97 in den in Fig. 5-6 dargestellten Situationen identische Reibwerte für einen Kontakt zwischen diesen Beschichtungen und den jeweiligen Riemen gewährleisten. Voraussetzungsgemäss sind diese Reibwerte geringer als der Reibwert für einen Kontakt zwischen dem Riemen 80 und dem Rollenkörper 86 und der Reibwert für einen Kontakt zwischen dem Riemen 105 und dem Rollenkörper 96.

In der in Fig. 5 dargestellten Situation sorgt die Beschichtung 87 für eine Minimierung der Querkraft F_{q}.

Die Tatsache, das die Flanken 92 und 93 um einen Winkel α gegenüber einer senkrecht zur Drehachse der Rolle 85 angeordneten Ebene geneigt sind, ist insbesondere von Vorteil, wenn der Riemen 80 unter Schrägzug steht und mit einer der Flanken in Kontakt gerät. Wegen der Neigung der Flanken kann die schmale Seite des Riemen 80 weniger leicht unter Wirkung eines Schrägzugs die der Rille 90 benachbarten Bereiche der Rolle 90 berühren, verglichen mit dem Fall α=0. Die Neigung der Flanken reduziert somit die Gefahr, dass der Riemen 80 unter Schrägzug die Rille 90 verlässt. Der Riemen wird dadurch zuverlässiger und sicherer geführt.

Die Verhältnisse im Fall der Fig. 6 unterscheiden sich von der Situation gemäss Fig. 5 hauptsächlich dadurch, dass der Grund 101 der Rille 100 in Richtung der Drehachse der Rolle 95 konvex gekrümmt ist. Der Riemen 105 nimmt unter einem Zug in seiner Längsrichtung diese Krümmung des Grundes 101 an und ist somit bei einem Umlauf um die Rolle 95 in seiner Querrichtung elastisch deformiert. Aufgrund dieser Deformation tendiert der Riemen, bevorzugt eine Lage einzunehmen, in der der Riemen 90 symmetrisch zur Ebene 102 liegt. Dadurch wird die Querkraft F_{q} reduziert und der Riemen 105 besonders stabil geführt. Dadurch, dass die Flanken 103 und 104 um den Winkel β geneigt sind, weist die Rolle 95 im Hinblick auf die Führung von unter Schrägzug stehenden Riemen dieselben Vorzüge auf, wie die Rolle 85. Zusätzlich ist der Winkel β so gewählt, dass die schmalen Seiten des Riemens 105 parallel zu den Flanken 103 bzw. 104 ausgerichtet sind, wenn der Riemen 105 bei einem Umlauf um die Rolle 95 mit einer dieser Flanken in Kontakt geraten sollte. Dadurch wird der Riemen 95 an seinen Seiten mit besonders geringen Kräften belastet, wenn er die Flanken 103 bzw. 104 berührt. Im Falle der Rolle 95 bilden somit die reibungsreduzierende Wirkung der Beschichtung 97, die Neigung der Flanken 103 und 104 (β>0) und die Krümmung des Grundes 101 der Rille 100 die Grundlage für eine besonders schonende Führung des Riemens 105.

Da die Rollen 85 und 95 mit einer reibungsreduzierenden Beschichtung versehen sind, ist auch für um die Rollen geführte Riemen die Traktion reduziert. Die Rollen 70, 85 und 95 sind deshalb bevorzugt als Umlenkrollen verwendbar.

Die vorstehenden Überlegungen sind analog übertragbar auf Aufzüge mit Zwillingsseilen als Tragmittel. Aus EP 1061172 ist beispielsweise ein Zwillingsseil bekannt, das aus zwei parallel angeordneten und in entgegengesetzten Drehrichtungen verseilten Kunstfaserseilen aufgebaut ist. Die beiden Kunstfaserseile sind durch einen gemeinsamen Seilmantel verdrehfest in einem Abstand zueinander fixiert. Je nach Form des Seilmantels kann der Querschnitt des Zwillingsseils beispielsweise hantelförmig sein. Der Seilmantel kann auch im Bereich zwischen den beiden Kunstfaserseilen eine ebene Fläche bilden. Ein derartig geformtes Zwillingsseil kann an der Oberfläche einer Rolle formschlüssig geführt werden, beispielsweise in einer Rille, die an die äussere Form der Querschnittsfläche des Seilmantels angepasst ist. Ein Zwillingsseil mit einer hantelförmigen Querschnittsfläche kann beispielsweise in einer (aus EP1096176 bekannten) Doppelrille formschlüssig geführt werden. Um eine schonende Führung des Zwillingsseils bei Schrägzug erreichen, kann die Rolle im Bereich der Rille mit einer reibungsreduzierenden Beschichtung gemäss der Erfindung versehen werden. Die Beschichtung kann beispielsweise an den Flanken der Rille angeordnet sein.

In den in den Fig. 1-6 dargestellten Beispielen wurden zur Führung der jeweiligen Zugmittel ausschliesslich Rollen verwendet. Es sei deshalb vermerkt, dass zur Führung der Zugmittel auch andere Körper, beispielsweise Gleitelemente mit Gleitflächen für die Zugmittel, verwendet werden können und diese Körper auch mit einer reibungsreduzierenden Beschichtung versehen werden können. Eine solche Anordnung bildet kein Teil der Erfindung.

## Patentansprüche

1. Aufzug (1) zum Befördern mindestens einer Last (3, 5) mit mindestens einem bewegbaren, mit der Last verbundenen Zugmittel (7, 50, 80, 105), wobei mindestens ein Abschnitt des Zugmittels in einen Kontakt gebracht ist mit mindestens einer Rolle (11, 20, 40, 60, 70, 85, 95), um das Zugmittel (7, 50, 80, 105) zu führen, und wobei die Rolle (11, 20, 40, 60, 70, 85, 95) eine Beschichtung (42, 62, 87, 97) und einen Träger (41, 61, 86, 96) der Beschichtung (42, 62, 87, 97) umfasst, und wobei der Träger (41, 61, 86, 96) eine Rille (43, 65, 90, 100) mit Flanken (67, 92, 93, 103, 104) zur Führung des Zugmittels (7, 50, 80, 105) aufweist und das Zugmittel (7, 50, 80, 105) mit der Beschichtung an einer Flanke (67, 92, 93, 103, 104) der Rille in Kontakt bringbar ist, **dadurch gekennzeichnet,**
**dass** ein Reibwert für einen Kontakt zwischen dem Zugmittel (7, 50, 80, 105) und der Beschichtung (42, 62, 87, 97) geringer ist als der entsprechende Reibwert für einen Kontakt zwischen dem Zugmittel (7, 50, 80, 105) und dem Träger (41, 61, 86, 96), wobei das Zugmittel (7. 50, 80, 105) Naturfasern (51, 81) und/oder Fasern (51) aus einem synthetischen Material und/oder mindestens einen metallischen Draht (51, 81) enthält, und wobei eine Oberfläche des Zugmittels (7, 50, 80, 105) wenigstens abschnittsweise von einer Umhüllung (52, 82, 107), welche eine oder mehrere der Fasern (51, 81) und/oder einen oder mehrere der Drähte (51, 81) umgibt, gebildet ist.

2. Aufzug nach einem der Ansprüche 1, **dadurch gekennzeichnet, dass** das Zugmittel (7, 50, 80, 105) an der Rolle (11, 20, 40, 60, 85, 95) derart geführt ist, dass es unter einem Schrägzug steht.

3. Aufzug nach einem der Ansprüche 1-2, **dadurch gekennzeichnet, dass** die Beschichtung (42, 87, 97) derart angeordnet ist, dass das Zugmittel (7, 50, 80, 105) über die Beschichtung mit der Rolle (11, 20, 40, 60, 85, 95) in Kontakt steht.

4. Aufzug nach einem der Ansprüche 1 bis 3, **dadurch gekennzeichnet, dass** die Beschichtung derart angeordnet ist, dass das Zugmittel (50) in der Rille (65) mit der Beschichtung (62) und/oder dem Träger (61) in Kontakt bringbar ist.

5. Aufzug nach Anspruch 1-4, **dadurch gekennzeichnet, dass** wenigstens ein Teil der Beschichtung (42, 62, 87, 97) an mindestens einer Flanke (67, 92, 93, 103, 104) der Rille (65, 90, 100) angeordnet ist und das Zugmittel (50, 80, 105) mit diesem Teil der Beschichtung in Kontakt bringbar ist.

6. Aufzug nach einem der Ansprüche 4 oder 5, **dadurch gekennzeichnet, dass** das Zugmittel (50) am Grund (66) der Rille (65) mit dem Träger (61) in Kontakt steht.

7. Aufzug nach einem der Ansprüche 1-2 oder 4-6, **dadurch gekennzeichnet, dass** die Rolle (20, 60) als Treibrolle zur Förderung des Zugmittels (7, 50) ausgebildet ist und mit einem Antrieb verbunden ist.

8. Aufzug nach einem der Ansprüche 1-7, **dadurch gekennzeichnet, dass** die Beschichtung (42, 62) ein Schmiermittel enthält.

9. Aufzug nach Anspruch 8, **dadurch gekennzeichnet, dass** das Schmiermittel ein Trockenschmiermittel enthält, beispielsweise Talkum, Graphitpulver, Molybdändisulfid, Polytetrafluorethylen (PTFE), Blei (Pb), Gold (Au), Silber (Ag), Bortrioxid (BO₃), Bleioxid (PbO), Zinkoxid (ZnO), Kupferoxid (Cu₂O), Molybdäntrioxid (MoO₃), Titandioxid (TiO₂) oder Mischungen dieser Substanzen.

10. Aufzug nach Anspruch 8, **dadurch gekennzeichnet, dass** das Schmiermittel ein Nassschmiermittel enthält, beispielsweise tierisches- , pflanzliches-, petrochemisches-und/oder synthetisches Öl bzw. Fett, Glyzerin, Polybuten, Polymeresther, Polyolefine, Polyglykole, Silikon, Seife, natürliche- bzw. künstliche Wachse, Harze und/oder Teere mit Zusätzen von organischen oder anorganischen Verdickungsstoffen z.B. org. Polymere, Polyharnstoff, Metallseifen, Silikate, Metalloxide, Kieselsäure, organophile Bentonite oder Mischungen dieser Substanzen.

11. Aufzug nach einem der Ansprüche 1-10, **dadurch gekennzeichnet, dass** die Umhüllung (52, 82, 107) aus einem Elastomer, beispielsweise aus Polyurethan oder Natur- oder Kunstgummi (EPR) oder Silikongummi, gebildet ist.

12. Aufzug nach einem der Ansprüche 1-11, **dadurch gekennzeichnet, dass** der Träger aus Stahl, Gusseisen, Polyamid, Teflon (Polytetrafluorethylen), Aluminium, Magnesium, Buntmetallen, Polypropylen, Polyethylen, PVC, Polyimide, Polyetherimide, EthylenPropylenDienMonomer (EPDM) oder Polyetheretherketon (PEEK) gefertigt ist.

## Claims

1. Lift (1) for transporting at least one load (3, 5) by at least one movable traction means (7, 50, 80, 105) connected to the load, wherein at least one section of the traction means is brought into contact with at least one pulley (11, 20, 40, 60, 70, 85, 95), in order to guide the traction means (7, 50, 80, 105), and wherein the pulley (11, 20, 40, 60, 70, 85, 95) comprises a coating (42, 62, 87, 97) and a carrier (41, 61, 86, 96) of the coating (42, 62, 87, 97), and wherein the carrier (41, 61, 86, 96) has a groove (43, 65, 90, 100) with flanks (67, 92, 93, 103, 104) for guiding the traction means (7, 50, 80, 105) and the traction means (7, 50, 80, 105) can be brought into contact with the coating on one flank (67, 92, 93, 103, 104) of the groove, **characterized in that** a coefficient of friction for contact between the traction means (7, 50, 80, 105) and the coating (42, 62, 87, 97) is less than the corresponding coefficient of friction for contact between the traction means (7, 50, 80, 105) and the carrier (41, 61, 86, 96), wherein the traction means (7, 50, 80, 105) contains natural fibres (51, 81) and/or fibres (51) of a synthetic material and/or at least one metal wire (51, 81), and wherein a surface of the traction means (7, 50, 80, 105) is formed at least in certain sections by a sheathing (52, 82, 107), which surrounds one more of the fibres (51, 81) and/or one or more of the wires (51, 81).

2. Lift according to Claim 1, **characterized in that** the traction means (7, 50, 80, 105) is guided on the pulley (11, 20, 40, 60, 85, 95) in such a way that it is under diagonal tension.

3. Lift according to either of Claims 1 and 2, **characterized in that** the coating (42, 87, 97) is arranged in such a way that the traction means (7, 50, 80, 105) is in contact with the pulley (11, 20, 40, 60, 85, 95) via the coating.

4. Lift according to one of Claims 1 to 3, **characterized in that** the coating is arranged in such a way that the traction means (50) can be brought into contact in the groove (65) with the coating (62) and/or the carrier (61).

5. Lift according to Claims 1-4, **characterized in that** at least part of the coating (42, 62, 87, 97) is arranged on at least one flank (67, 92, 93, 103, 104) of the groove (65, 90, 100) and the traction means (50, 80, 105) can be brought into contact with this part of the coating.

6. Lift according to either of Claims 4 and 5, **characterized in that** the traction means (50) is in contact with the carrier (61) at the base (66) of the groove (65).

7. Lift according to one of Claims 1-2 or 4-6, **characterized in that** the pulley (20, 60) is formed as a drive pulley for conveying the traction means (7, 50) and is connected to a drive.

8. Lift according to one of Claims 1-7, **characterized in that** the coating (42, 62) contains a lubricant.

9. Lift according to Claim 8, **characterized in that** the lubricant comprises a dry lubricant, for example talc, graphite powder, molybdenum disulphide, polytetrafluoroethylene (PTFE), lead (Pb), gold (Au), silver (Ag), boron trioxide (BO₃), lead oxide (PbO), zinc oxide (ZnO), copper oxide (Cu₂O), molybdenum trioxide (MoO₃), titanium dioxide (TiO₂) or mixtures of these substances.

10. Lift according to Claim 8, **characterized in that** the lubricant comprises a wet lubricant, for example animal, plant, petrochemical and/or synthetic oil or grease, glycerol, polybutene, polymer esters, polyolefins, polyglycols, silicone, soap, natural or synthetic waxes, resins and/or tars with additives of organic or inorganic thickeners, for example organic polymers, polycarbamide, metal soaps, silicates, metal oxides, silicic acid, organophilic bentonites or mixtures of these substances.

11. Lift according to one of Claims 1-10, **characterized in that** the sheathing (52, 82, 107) is formed by an elastomer, for example polyurethane or natural or synthetic rubber (EPR) or silicone rubber.

12. Lift according to one of Claims 1-11, **characterized in that** the carrier is produced from steel, cast iron, polyamide, Teflon (polytetrafluoroethylene), aluminium, magnesium, nonferrous metals, polypropylene, polyethylene, PVC, polyimides, polyetherimides, ethylene propylene diene monomer (EPDM) or polyether ether ketone (PEEK).

## Revendications

1. Elévateur (1) destiné à transporter au moins une charge (3, 5) et présentant au moins un moyen mobile de traction (7, 50, 80, 105) relié à la charge,
au moins une partie du moyen de traction étant mise en contact avec au moins un galet (11, 20, 40, 60, 70, 85, 95) qui guide le moyen de traction (7, 50, 80, 105),
les galets (11, 20, 40, 60, 70, 85, 95) présentant un revêtement (42, 62, 87, 97) et un support (41, 61, 86, 96) pour le revêtement (42, 62, 87, 97),
le support (41, 61, 86, 96) présentant une rainure (43, 65, 90, 100) dotée de flancs (67, 92, 93, 103, 104) qui guident le moyen de traction (7, 50, 80, 105),
le moyen de traction (7, 50, 80, 105) pouvant être mis en contact avec le revêtement sur un flanc (67, 92, 93, 103, 104) de la rainure,
**caractérisé en ce que**
le coefficient de frottement du contact entre le moyen de traction (7, 50, 80, 105) et le revêtement (42, 62, 87, 97) est inférieur au coefficient de frottement du contact entre le moyen de traction (7, 50, 80, 105) et le support (41, 61, 86, 96),
**en ce que** le moyen de traction (7, 50, 80, 105) contient des fibres naturelles (51, 81), des fibres (51) en matériau synthétique et/ou au moins un fil métallique (51, 81) et
**en ce qu'**au moins une partie d'une surface du moyen de traction (7, 50, 80, 105) est formée d'une enveloppe (52, 82, 107) qui entoure une ou plusieurs des fibres (51, 81) et/ou un ou plusieurs des fils (51, 81).

2. Elévateur selon la revendication 1, **caractérisé en ce que** le moyen de traction (7, 50, 80, 105) est guidé sur le galet (11, 20, 40, 60, 85, 95) de manière à être tiré obliquement.

3. Elévateur selon l'une des revendications 1 et 2, **caractérisé en ce que** le revêtement (42, 87, 97) est disposé de telle sorte que le moyen de traction (7, 50, 80, 105) soit en contact avec le galet (11, 20, 40, 60, 85, 95) par l'intermédiaire du revêtement.

4. Elévateur selon l'une des revendications 1 à 3, **caractérisé en ce que** le revêtement est disposé de telle sorte que le moyen de traction (50) puisse être mis en contact dans la rainure (65) avec le revêtement (62) et/ou avec le support (61).

5. Elévateur selon les revendications 1 à 4, **caractérisé en ce qu'**au moins une partie du revêtement (42, 62, 87, 97) est disposée sur au moins un flanc (67, 92, 93, 103, 104) de la rainure (65, 90, 100) et **en ce que** le moyen de traction (50, 80, 105) peut être mis en contact avec cette partie du revêtement.

6. Elévateur selon l'une des revendications 4 ou 5, **caractérisé en ce que** le moyen de traction (50) est en contact avec le support (61) au fond (66) de la rainure (65).

7. Elévateur selon l'une des revendications 1 et 2 ou 4 à 6, **caractérisé en ce que** le galet (20, 60) est configuré comme galet d'entraînement qui transporte le moyen de traction (7, 50) ou est relié à un entraînement.

8. Elévateur selon l'une des revendications 1 à 7, **caractérisé en ce que** le revêtement (42, 62) contient un agent lubrifiant.

9. Elévateur selon la revendication 8, **caractérisé en ce que** l'agent de lubrification contient un agent de lubrification à sec, par exemple du talc, de la poudre de graphite, du disulfure de molybdène, du polytétrafluoroéthylène (PTFE), du plomb (Pb), de l'or (Au), de l'argent (Ag), du trioxyde de bore (BO₃), de l'oxyde de plomb (PbO), de l'oxyde de zinc (ZnO), de l'oxyde de cuivre (Cu₂O), du trioxyde de molybdène (MoO₃), du dioxyde de titane (TiO₂) ou des mélanges de ces substances.

10. Elévateur selon la revendication 8, **caractérisé en ce que** l'agent de lubrification contient un agent de lubrification humide, par exemple une huile d'origine animale, végétale, pétrochimique et/ou synthétique, ou de la graisse, de la glycérine, du polybutène, des esters polymères, de polyoléfines, des polyglycoles, du silicone, des savons, des cires d'origine naturelle ou artificielle, des résines et/ou des goudrons dotés d'additifs constitués de substances épaississantes d'origine organique ou minérale, par exemple des polymères organiques, des polyurées, des savons métalliques, des silicates, des oxydes de métaux, de l'acide silicique, des bentonites organophiles ou des mélanges de ces substances.

11. Elévateur selon l'une des revendications 1 à 10, **caractérisé en ce que** l'enveloppe (52, 82, 107) est formée d'un élastomère, par exemple de polyuréthane, de caoutchouc d'origine naturelle ou synthétique (EPR) ou de caoutchouc au silicone.

12. Elévateur selon l'une des revendications 1 à 11, **caractérisé en ce que** le support est réalisé en acier, en fonte, en polyamide, en téflon (polytétrafluoroéthylène), en aluminium, en magnésium, en métaux non ferreux, en polypropylène, en polyéthylène, en PVC, en polyimide, en polyétherimide, en monomère d'éthylène-propylène-diène (EPDM) ou en polyéthercétone (PEEK).
